# EUROPEAN PATENT SPECIFICATION

(11) **EP 1 840 359 B1**
(45) Date of publication and mention of the grant of the patent: **02.11.2011**
(21) Application number: 07003064.8
(22) Date of filing: 13.02.2007
(51) Int. Cl.: F02D 41/06, F02D 41/34, F02N 11/08

(54) **Control system for multi-cylinder four-cycle engine**
Steuersystem für einen mehrzylindrigen Viertaktmotor
Système de contrôle pour moteur multicylindrique à quatre cycles

(30) Priority: 31.03.2006 JP 2006100785
(43) Date of publication of application: 03.10.2007
(73) Proprietor: Mazda Motor Corporation, Aki-gun, Hiroshima 730-8670 (JP)
(72) Inventor: Nakayama, Yoshiteru, Aki-gun Hiroshima 730-8670 (JP); Hosoya, Hideki, Aki-gun Hiroshima 730-8670 (JP); Sugiyama, Takanori, Aki-gun Hiroshima 730-8670 (JP); Taga, Junichi, Aki-gun Hiroshima 730-8670 (JP); Tetsuno, Masayuki, Aki-gun Hiroshima 730-8670 (JP)
(74) Representative: Müller-Boré & Partner Patentanwälte

(56) References cited:
- EP-A- 1 496 230
- EP-A- 1 533 501
- WO-A-2006/013167
- JP-A- 2001 173 488
- JP-A- 2005 180 208

## Description

The present invention relates to a multi-cylinder four-cycle engine control system, and more particularly to a multi-cylinder four-cycle engine control system suitable for an automatic stop system using motor-operated drive means.

As disclosed, for example, in Japanese Patent Laid-Open Publication No. 2005-180208 ("PD1"), there has been known an engine control system (automatic stop system) designed to automatically stop the engine during idling (so-called "idling stop") for the purpose of reductions in fuel consumption and CO₂ emissions.

In this automatic stop system, it is necessary to quickly restart the engine in an automatic stop state, in response to an engine restart request, such as a driver's action to start moving a vehicle. In respect of this need, a conventional technique of starting an engine through a cranking process using motor-operated drive means is liable to make an automatic restart time slightly longer. Moreover, the conventional technique has a problem about cranking noise and engine racing (excessively rapid increase in engine speed), causing uncomfortable feeling.

Further, if the engine is restarted with assistance of the motor-operated drive means every timing to be an idling state, the motor-operated drive means will be used for engine start with an extremely higher frequency than that in a conventional engine-cranking system where the motor-operated drive means is used only when an ignition switch is operated, and thereby required to have significantly high durability, leading to unwanted increase in cost.

In consideration of the above situations, recent years, there has been developed a technique designed to inject fuel into a stop-state expansion-stroke cylinder which is on an expansion stroke in an automatic stop state, and ignite the injected fuel to carry out combustion so as to allow an engine in the automatic stop state to be restarted by its own ability without any assistance of motor-operated drive means, as in an in-cylinder direct-injection gasoline engine disclosed, for example, in the PD 1.

Particularly, in the PD 1, a reverse-rotational restart process is employed in which the engine in the automatic stop state is operated in a reverse rotation direction by a given crank angle based on combustion in a stop-state compression-stroke cylinder which has been on a compression stroke in the automatic stop state, and then operated in a normal rotation direction based on combustion in the stop-state expansion-stroke cylinder. That is, the combustion in the stop-state expansion-stroke cylinder is carried out after increasing an in-cylinder pressure thereof which has been close to atmospheric pressure, so as to allow the stop-state expansion-stroke cylinder to generate higher combustion energy.

During an initial stage of automatic restart in the automatic stop system employing the above reverse-rotational restart process, it is required to allow two cylinders (e.g., the stop-state compression-stroke cylinder and an after-mentioned stop-state intake-stroke cylinder) to overcome respective compression strokes based on the combustion in the stop-state expansion-stroke cylinder, and therefore the engine speed is relatively low.

Thus, until the two cylinders overcome the compression strokes, i.e., the stop-state intake-stroke cylinder overcomes a compression stroke, a heat receiving time, or a time period where charged air and injected fuel in each cylinder receive heat from a wall surface of the combustion chamber becomes longer. That would lead to increase temperatures of the charged air and the injected fuel and facilitate activation of the injected fuel, and consequently self-ignition is more likely to occur. If such self-ignition occurs in the cylinder which is undergoing the compression stroke, a piston of the cylinder will be moved in a direction causing a reverse rotation of the engine to result in a problem of failing in engine restart.

In the PD 1, with a view to preventing the occurrence of self-ignition in a stop-state intake-stroke cylinder which has been on an intake stroke in the automatic stop state, a fuel injection timing for the stop-state intake-stroke cylinder is retarded to allow fuel to be injected into the stop-state intake-stroke cylinder when it is undergoing a compression stroke for the first time after initiation of the automatic restart, and an ignition timing for the stop-state intake-stroke cylinder is likewise retarded to allow ignition to be carried out after the top dead center of the compression stroke.

However, through various researches made by the inventors of the present invention, it appears that self-ignition during the initial stage of the automatic restart would also occur in the stop-state exhaust-stroke cylinder which would have been on an exhaust stroke in an automatic stop state which undergoes a compression stroke occurring third after the automatic restart under the conditions that: in-cylinder temperature is significantly high; engine speed is significantly low; or existence of a fuel leakage from a fuel injection valve.

JP 2001 173488 A discloses a starting device for direct cylinder injection type internal combustion engine in which piston positions of a compression stroke cylinder and a suction stroke cylinder of a stopped internal combustion engine are detected, and a fuel injection amount and injection timing is determined in spark ignition area so a to avoid a self-ianition area, on the basis of a map corresponding to the piston positions.

EP-A-1 496 230 discloses a start-up control of in-cylinder fuel injection spark ignition internal combustion engine by means of compression stroke fuel injection from the beginning of cranking of the engine to the end of a stratified combustion start-up period.

Accordingly, an object of the present invention is to provide a multi-cylinder four-cycle engine control system capable of reliably preventing the occurrence of self-ignition in a cylinder which has not been acknowledged as a problem, to ensure the certainty of engine restart.

In order to achieve the above object, the present invention provides a control system for a multi-cylinder four-cycle engine, which is designed to, when a condition for restarting the engine in an automatic stop state is satisfied, operate once the engine in a reverse rotation direction by a given crank angle based on combustion in a stop-state compression-stroke cylinder which has been on a compression stroke in the automatic stop state, and then operated the engine in a normal rotation direction based on combustion in a stop-state expansion-stroke cylinder which has been on an expansion stroke in the automatic stop state, so as to automatically restart the engine by means of injecting fuel into said stop-state expansion-stroke cylinder and driving a spark plug. The control system is characterized by comprising motor-operated drive means adapted to assist at least the automatic restart timing of the engine in the automatic stop state, operational-state detection means adapted to detect at least an engine speed and a crank position of each of the cylinders, and fuel-injection control means adapted to control an amount and a timing of fuel injection for each of the cylinders based on an engine speed and a crank position detected by the operational-state detection means so as to set a given in-cylinder air-fuel ratio at a given fuel injection timing. The fuel-injection control means is operable, after initiation of the automatic restart, to set an initial fuel injection timing for a stop-state intake-stroke cylinder which has been on an intake stroke in the automatic stop state, to allow fuel to be injected when the stop-state intake-stroke cylinder reaches intermediate of a compression stroke. Further, the fuel-injection control means is operable, when an engine speed detected by the operational-state detection means at a given timing counted from the combustion in the stop-state expansion-stroke cylinder reaches at least a given reference engine speed, to set an in-cylinder air-fuel ratio of the stop-state intake-stroke cylinder at the initial fuel injection timing in such a manner as to become equal to a given reference air-fuel ratio, while when the detected engine speed is less than the given reference engine speed, to set the in-cylinder air-fuel ratio in such a manner as to become richer than the reference air-fuel ratio as the detected engine speed has a lower value, within a combustible range.

In the above control system of the present invention, according to the reverse-rotational restart process, when the automatic restart is conducted, the engine is operated in normal direction by carrying out combustion in the stop-state expansion-stroke cylinder after the operation in the reverse rotation direction by the combustion in the stop-state compression-stroke cylinder to be operated in the normal rotation direction. Then, after the stop-state compression-stroke cylinder, which has been subjected to the combustion, overcomes the first compression stroke, the stop-state intake-stroke cylinder undergoes the second compression stroke. Fuel is injected into the stop-state intake-stroke cylinder at intermediate of the second compression stroke, and ignited at a given timing. In this process, an amount of fuel to be injected into the stop-state intake-stroke cylinder is changed depending on an engine speed detected at a given timing counted from the combustion in the stop-state expansion-stroke cylinder. The given timing may be counted from initiation of the combustion to the stop-state compression-stroke cylinder overcomes a compression stroke which occurs first after initiation of the automatic restart. Specifically, when an engine speed detected at the given timing is relatively low, an in-cylinder air-fuel ratio of the stop-state intake-stroke cylinder is set at a relatively rich value within the combustible range. Thus, an in-cylinder temperature of the stop-state intake-stroke cylinder can be lowered based on a latent heat of vaporization of injected fuel to facilitate lowering an in-cylinder pressure so as to reliably prevent the occurrence of self-ignition by a synergistic effect with formation of an over-rich air-fuel mixture. When the detected engine speed is relatively high, self-ignition is less likely to occur. Thus, the fuel injection amount is set such that the in-cylinder air-fuel ratio becomes relatively lean (this does not necessarily mean that the in-cylinder air-fuel ratio is leaner than a theoretical air-fuel mixture), to facilitate enhancing exhaust emission performance.

In a preferred embodiment of the present invention, the reference air-fuel ratio is in the range of 11 to 15, and the combustible range has a rich limit value of at least 5. As above, the fuel injection timing of the stop-state intake-stroke cylinder most susceptible to self-ignition is set at the intermediate timing of the compression stroke. In combination of this fuel injection timing, the setting in the preferred embodiment makes it possible to satisfy both the needs for preventing the occurrence of self-ignition and suppressing deterioration in exhaust emission performance, and prevent so-called "engine racing" (excessively rapid increase in engine speed).

In a preferred embodiment of the present invention, the fuel-injection control means is operable to inject additional fuel into a specific one of the cylinders which undergoes the aforementioned second compression stroke, when the specific cylinder is on the second compression stroke, provided that the extent thereof is an in-cylinder air-fuel ratio of the specific cylinder is within the combustible range.

According to this preferred embodiment, under the condition that the engine is operated at a relatively low engine speed, additional fuel is injected into the stop-state intake-stroke cylinder at a timing when the stop-state intake-stroke cylinder is on the second compression stroke, to form a so-called "power-rich air-fuel mixture" therein so as to prevent the occurrence of self-ignition and obtain a higher torque while enhancing an exhaust emission performance.

In a preferred embodiment of the present invention, the given timing is a moment when a piston of the stop-state compression-stroke cylinder reaches a top dead center of a compression stroke which occurs first after the initiation of the automatic restart.

According to this preferred embodiment, the engine speed is detected at the top dead center of the compression stroke which allows for reliable detection of engine speed. This makes it possible to control the air-fuel ratio with a higher degree of accuracy so as to satisfy both the needs for preventing the occurrence of self-ignition and maintaining an adequate exhaust emission performance.

In a preferred embodiment of the present invention, the operational-state detection means has a function of estimating an in-cylinder temperature of the engine, and the fuel-injection control means is operable, when an in-cylinder temperature estimated by the operational-state detection means in a time period before the stop-state intake-stroke cylinder overcomes a compression stroke for the first time after the initiation of the automatic restart reaches at least a given value, to set the in-cylinder air-fuel ratio in such a manner as to become richer than the reference air-fuel ratio, within the combustible range, irrespective of the value of the detected engine speed.

According to this preferred embodiment, with a focus on an in-cylinder temperature of the engine in a time period before the stop-state intake-stroke cylinder undergoes the compression stroke, when the in-cylinder temperature of the engine is relatively high, the in-cylinder air-fuel ratio is set at a richer value than the reference air-fuel ratio, irrespective of the value of the detected engine speed, to more reliably prevent the occurrence of self-ignition.

In a preferred embodiment of the present invention, the operational-state detection means is adapted to determine that the in-cylinder temperature is higher as an elapsed time after initiation of the automatic stop state of the engine is closer to a given value which is equal to less than 60 seconds.

According to this preferred embodiment, based on inventers' knowledge that a charged-air temperature in the cylinder is rapidly increased within a given elapsed time after initiation of the automatic stop state of the engine, which is equal to or less than 60 seconds, the operational-state detection means is configured to determine that the in-cylinder temperature is higher as an elapsed time after satisfaction of the restart condition is closer to the given elapsed time. This makes it possible to reliably prevent the occurrence of knocking under temperature conditions which are highly likely to cause self-ignition.

In a preferred embodiment of the present invention, the control system further comprises a coolant temperature sensor for detecting a temperature of coolant of the engine, and the operational-state detection means is adapted to estimate the in-cylinder temperature based on detection of the coolant temperature sensor.

In a preferred embodiment of the present invention, the control system further comprises an intake-air temperature sensor for detecting a temperature of intake air of the engine, and the operational-state detection means is adapted to estimate the in-cylinder temperature based on detection of the intake-air temperature sensor.

These and other objects, features and advantages of the invention will become more apparent upon reading the following detailed description along with the accompanying drawings, in which:
FIG. 1 is a schematic block diagram of an engine control system according to one embodiment of the present invention;
FIG 2 is a schematic diagram showing the structure of an intake system and an exhaust system of an engine equipped with the engine control system;
FIG. 3 is a schematic diagram showing appropriateness for a piston stop range during automatic stop;
FIGS. 4A to 4D are schematic diagrams showing an engine restart process in the engine control system;
FIG. 5 is a graph showing a relationship between an in-cylinder temperature and an elapsed time after initiation of the automatic stop or estimated values in case the in-cylinder temperature was 80°C when the engine was stopped;
FIG. 6 is a graph showing a relationship between a piston stop position in an automatically stopped engine and a self-ignition occurrence timing;
FIGS. 7A to 7F are graphs showing a relationship between fuel injection timing and self-ignition for each fuel leakage amount during a compression stroke of a stop-state intake-stroke cylinder;
FIGS. 8A and 8B are graphs showing a relationship between fuel injection timing and self-ignition for each fuel leakage amount during the compression stroke of the stop-state intake-stroke cylinder;
FIG. 9 is a timing chart showing a fuel injection timing;
FIG. 10 is a flowchart showing a main routine of a restart control process;
FIG. 11 is a flowchart showing a subroutine of a combustion restart control step;
FIG. 12 is a flowchart showing the subroutine of the combustion restart control step;
FIG. 13 is a flowchart showing the subroutine of the combustion restart control step;
FIG. 14 is a flowchart showing the subroutine of the combustion restart control step; and
FIG. 15 is a timing chart based on the flowcharts in FIGS. 11 to 14.

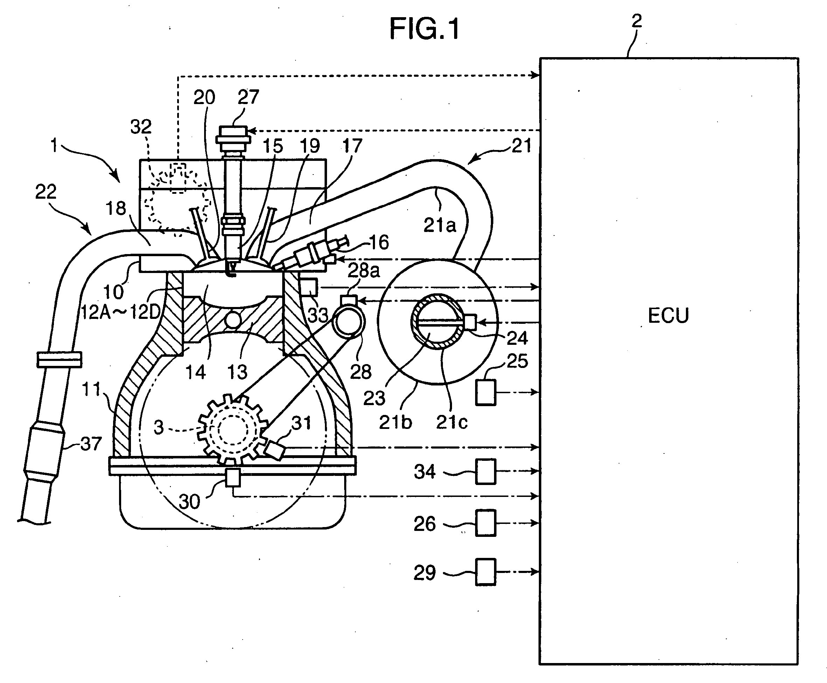

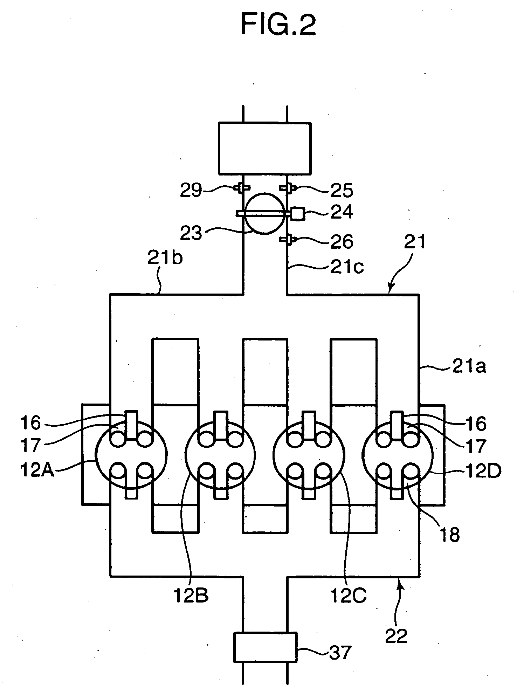

Referring to FIGS. 1 and 2, an engine control system according to one embodiment of the present invention comprises a control unit (ECU) 2 for controlling an engine 1 which includes a cylinder head 10 and a cylinder block 11.

The engine 1 has four cylinders 12A to 12D. As shown in FIG. 1, a piston 13 connected to a crank shaft 3 is slidably inserted into each of the cylinders 12A to 12D in such a manner that a combustion chamber 14 is defined inside each of the cylinders 12A to 12D and above the piston 12.

Typically, a multi-cylinder four-cycle engine is designed to carry out a combustion cycle consisting of intake, compression, expansion and exhaust strokes with a given phase difference therebetween. In this embodiment, given that the four cylinders are referred to respectively as "1st cylinder 12A", "2nd cylinder 12B", "3rd cylinder 12C" and "4th cylinder 12D" from one end of cylinder arrangement, the four-cylinder engine is designed to carry out combustion in the 1st cylinder (#1), the 3rd cylinder (#3), the 4th cylinder (#4) and the 2nd cylinder (#2) in this order with a phase difference of 180 crank angle (CA) degrees therebetween.

Further, in this description, a cylinder on a compression stroke in an automatic stop state of the engine will be referred to as "stop-state compression-stroke cylinder", and a cylinder on an expansion stroke in the automatic stop state of the engine will be referred to as "stop-state expansion-stroke cylinder". In the same manner, a cylinder on an intake stroke in the automatic stop state of the engine will be referred to as "stop-state intake-stroke cylinder", and a cylinder on an exhaust stroke in the automatic stop state of the engine will be referred to as "stop-state exhaust-stroke cylinder".

Referring to FIG. 1, a spark plug 15 is installed in the cylinder head 10 at a position corresponding to a top of the combustion chamber 14 in each of cylinders 12A to 12D to ignite and burn an air-fuel mixture in the combustion chamber 14. The spark plug 15 is disposed such that an electrode at a tip thereof is exposed to the combustion chamber 14. Further, a fuel injection valve 16 is installed in the cylinder head 10 on a lateral side (right side in FIG 1) of the combustion chamber 14 in such a manner that a nozzle hole at a tip thereof is exposed to the combustion chamber 14. This fuel injection valve 16 incorporates a needle valve and a solenoid (not shown). Specifically, the fuel injection valve 16 is adapted to be driven in response to input of a pulse signal from the control unit 2 and opened only within a time period corresponding to a pulse width of the pulse signal so as to inject fuel directly into a corresponding one of the cylinders 12A to 12D in an amount corresponding to a driven time thereof. Further, the fuel injection valve 16 is arranged to inject fuel toward a vicinity of the electrode 15 of the spark plug 15.

Although not illustrated, the fuel injection valve 16 is connected to a fuel pump via a fuel supply passage and others so as to be supplied with fuel from the fuel pump, and a fuel supply pressure thereof is set at a value greater than an inner pressure of the combustion chamber 14 in a corresponding one of the cylinders 12A to 12D, so that fuel can be injected into the combustion chamber 14 having a high inner pressure at and after an intermediate timing of a compression stroke in the cylinder. An intake port 17 and an exhaust port 18 are formed in the cylinder head 10 in such a manner as to be opened to an upper zone of the combustion chamber 14 in each of the cylinders 12A to 12D. The intake and exhaust ports 17, 18 are provided with an intake valve 19 and an exhaust valve 20, respectively. The intake valve 19 and the exhaust valve 20 are adapted to be driven by a valve drive mechanism including a camshaft (not shown). Respective valve opening timings of the intake valve 19 and the exhaust valve 20 according to the valve drive mechanism are set to allow the combustion cycle to be carried out in each of the cylinders 12A to 12D with a given phase difference therebetween.

As shown in FIG. 2, the intake port 17 and the exhaust port 18 communicate with an intake passage 21 and an exhaust passage 22, respectively. The intake passage 21 has four branched intake passages 21a on a downstream side, i.e., on the side closer to the intake port 17, in a separated manner with respect to each of the cylinders 12A to 12D, and a surge tank 21b communicating with respective upstream ends of the branched intake passages 21a. Further, on an upstream side of the surge tank 21b, the intake passage 21 has a common intake passage 21c for all of the cylinders 12A to 12D. The common intake passage 21c is provided with a throttle valve 23 for adjusting a sectional area of the passage 21c to restrict an intake-air flow, and an actuator 24 for moving the throttle valve 23. Further, the common intake passage 21c is provided with an airflow sensor 25 for detecting an intake-air volume and an intake-air pressure sensor 26 for detecting an intake-air pressure (boost pressure; negative pressure), respectively, on upstream and downstream sides of the throttle valve 23.

An alternator 28 is disposed adjacent to the engine 1, and drivenly coupled to the crankshaft 3 through a belt or the like. The alternator 28 includes a built-in regulator circuit 28a for controlling a field coil current to change an output voltage so as to adjust an output power thereof. Fundamentally, the alternator 28 is operable to control the output power depending on an electric load of an electric component of a vehicle and a voltage of an in-vehicle battery, according to input of a control command (e.g., a voltage signal) from the control unit 2. When the output power of the alternator 28 is changed in this manner, a driving force necessary for the alternator 28, i.e., a level of an external load to be imposed on the engine 1, will be changed.

In an exhaust system of the engine, a catalyst 37 is disposed in the exhaust passage on a downstream side of an exhaust manifold to purify exhaust gas. For example, the catalyst 37 is a so-called "three-way catalyst" which exhibits a significantly high conversion efficiency of HC, CO and NOx when an air-fuel ratio of exhaust gas is close to a theoretical air-fuel ratio, and has an oxygen absorbing/releasing capability of absorbing and storing oxygen in an oxygen-excess atmosphere where an oxygen concentration of exhaust gas is relatively high, and releasing the stored oxygen when the oxygen concentration is relatively low, to induce a reaction with HC, CO and other emission. The catalyst 37 is not limited to the three-way catalyst, but may be any other suitable catalyst having the above oxygen absorbing/releasing capability, such as a so-called "lean NOx catalyst" capable of converting NOx even in an oxygen-excess atmosphere.

The engine 1 is provided with two crank angle sensors 30 and 31 for detecting a rotational angle of the crankshaft 3. Specifically, the crank angle sensor 30 is adapted to generate a detection signal for use in detecting an engine speed Ne. The crank angle sensor 31 is adapted to generate a detection signal which is out of phase with that of the crank angle sensor 30 so as to allow a rotation direction and a phase of the crankshaft 3 to be detected based on the two detection signals.

The engine 1 is further provided with a cam angle sensor 32 for detecting a specific rotational position for cylinder identification, and a coolant temperature sensor 33 for detecting a temperature of engine coolant. A vehicle body is provided with an accelerator angle sensor 34 for detecting an angle of an accelerator pedal corresponding to a displacement amount of the accelerator pedal based on a driver's action.

The control unit 2 is a microprocessor for comprehensively controlling an engine operation. The engine control system according to this embodiment is designed to perform a control (idling stop control or automatic stop control) for automatically stopping the engine by interrupting a fuel injection (fuel cut) for each of the cylinders 12A to 12D at a given timing when a predetermined automatic stop condition is satisfied, and a control (combustion-based automatic restart control) for automatically restarting the engine in an automatic stop state when a predetermined automatic restart condition, such as a driver's action to move an accelerator pedal. For achieving these controls, the control unit 2 is adapted to receive respective detection signals from the airflow sensor 25, the intake-air pressure sensor 26, the intake-air temperature sensor 29, the crank angle sensors 30 and 31, the cam angle sensor 32, the coolant temperature sensor 33 and the accelerator angle sensor 34, and output a drive signal to each of the fuel injection valves 16, the actuator 24 for the throttle valve 23, an ignition device 27 for the spark plugs 15, and the regulator circuit 28a of the alternator 28. In this manner, the control unit 2 functionally makes up operational-state detection means, piston-stop-position determination means, fuel-injection control means and ignition control means.

The control for automatically stopping the engine 1 according to the control unit 2 will be specifically described below.

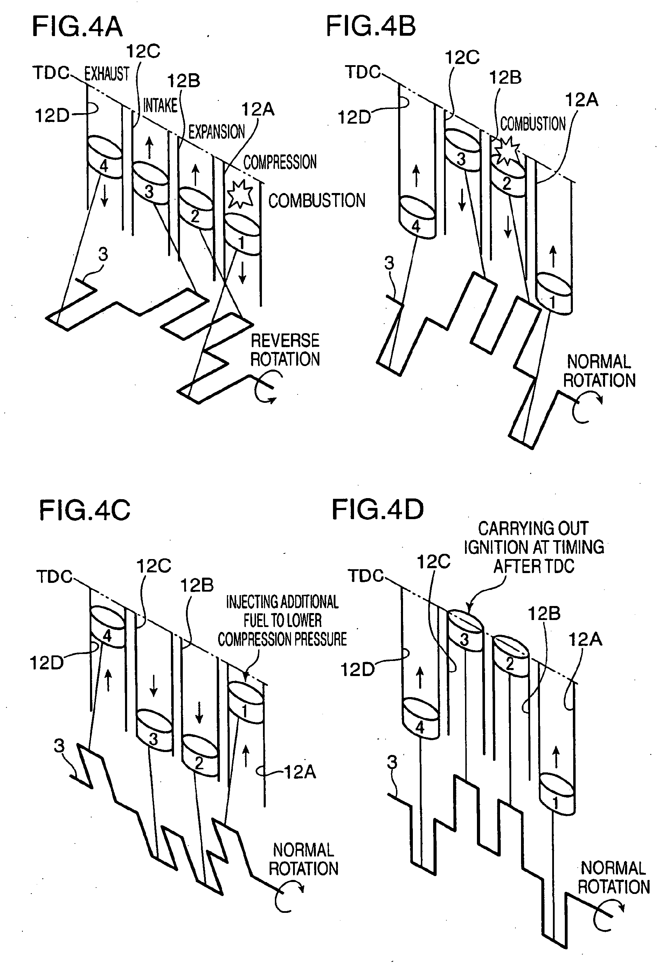

In the automatic stop control of the engine 1, when a given engine stop condition, such as given conditions of a vehicle speed, a brake operating state and an engine coolant temperature, is satisfied, either one (e.g., 1st cylinder 12A) of the cylinders is selected to determine whether a given requirement for automatic stop of the engine 1 has been fulfilled in the selected cylinder. If it is determined that the requirement is fulfilled, the fuel injection for each of the cylinders 12A to 12D is interrupted, and the throttle valve 23 is opened up to a given opening degree so as to perform sufficient scavenging. Then, the throttle valve 23 and the alternator 20 are controlled based on an engine speed to adjust a load on the engine 1. Thus, the engine speed is gradually lowered while repeatedly fluctuating up and down, and (a piston of) the stop-state compression-stroke cylinder 12A (stop-state expansion-stroke cylinder 12B) is finally stopped within a desired stop range (non-assisted-combustion-restart enabling stop range in FIG 4) R.

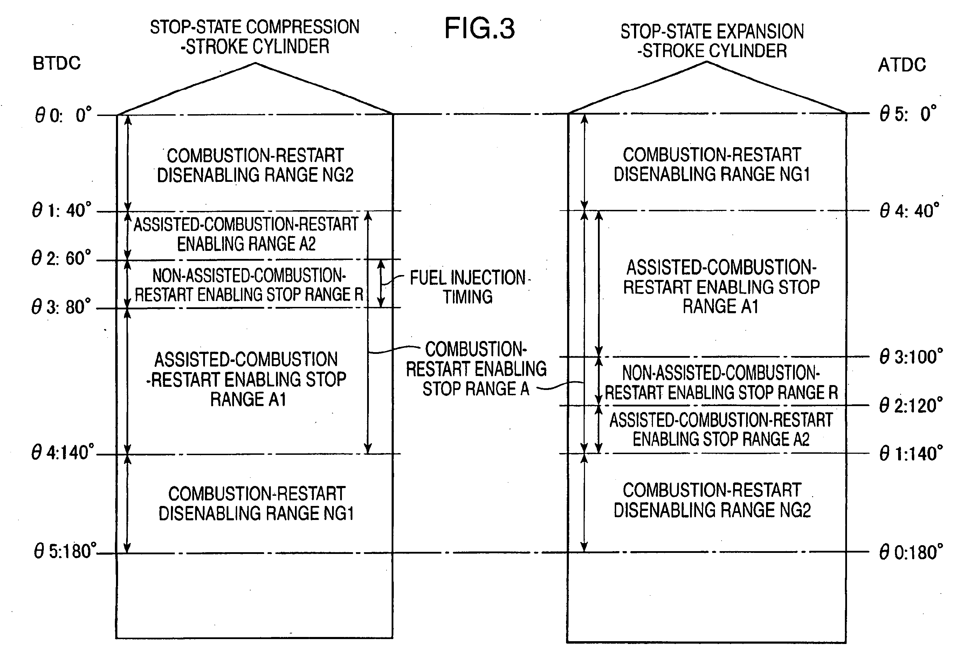

Referring to FIG. 3, a memory of the control unit 2 stores a predetermined combustion-restart enabling stop range A which is defined by an upper limit of crank angle (CA) before Top Dead Center (TDC) or after TDC (i.e., θ1 in the stop-state compression-stroke cylinder 12A; θ4 in stop-state expansion-stroke cylinder 12B), and a lower limit of CA before TDC or after TDC (i.e., θ4 in the stop-state compression-stroke cylinder 12A; θ1 in stop-state expansion-stroke cylinder 12B). While the piston 13 in each of the cylinders 12A and 12B is stopped within the combustion-restart enabling range A according to the automatic stop control, the piston in the stop-state compression-stroke cylinder 12A is preferably stopped within a range slightly closer to TDC relative to 90 CA degrees before TDC. In this embodiment, a range between 60 CA degrees before TDC and 80 CA degrees before TDC in the stop-state compression-stroke cylinder (in the stop-state expansion-stroke cylinder, a range between 100 CA degrees after TDC and 120 CA degrees after TDC), i.e., a range between θ2 and θ3 in FIG 3, is defined as "non-assisted-combustion-restart enabling stop range R". Two ranges between a TDC-side limit of the non-assisted-combustion-restart enabling stop range R and θ1 in FIG. 3 and between a BDC (Bottom Dead Center)-side limit of the non-assisted-combustion-restart enabling stop range R and θ4 in FIG. 3, in the stop-state compression-stroke cylinder (in the stop-state expansion-stroke cylinder, two range between a BDC-side limit of the non-assisted-combustion-restart enabling stop range R and θ1 and between a TDC-side limit of the non-assisted-combustion-restart enabling stop range R and θ4) are defined, respectively, as "assisted-combustion-restart enabling stop range A2" and "assisted-combustion-restart enabling stop range A1". Further, the remaining two ranges are defined, respectively, as "combustion-restart disabling stop range NG2" and "combustion-restart disabling stop range NG1". These ranges are used as determination criteria by the control unit 2.

The non-assisted-combustion-restart enabling stop range R means a range of piston stop position which enables the engine 1 to be automatically restarted only by combustion without assistance of a starter motor (not shown). Specifically, when the piston 13 of the stop-state expansion-stroke cylinder is stopped within the non-assisted-combustion-restart enabling stop range R, an air volume in the stop-state expansion-stroke cylinder is maximized to allow combustion energy to be sufficiently produced. Further, during the automatic stop control, an opening degree K of the throttle valve 23 is increased to facilitate scavenging while supplying a sufficient volume of fresh air to the catalyst 37. Thus, in the automatic stop state, a sufficiently large amount of oxygen is stored in the catalyst 37, and a desired air volume is ensured in the stop-state compression-stroke cylinder. Therefore, in the automatic restart control, when combustion is initially carried out in the stop-state compression-stroke cylinder, the stop-state compression-stroke cylinder can produce combustion energy for reversely rotating the crankshaft 3 by a small angle. Then, the large air volume ensured in the stop-state expansion-stroke cylinder can produce sufficient combustion energy for normally rotating the crankshaft 3 to reliably restart the engine.

For this purpose, in this embodiment, during the automatic stop control for automatically stopping the engine 1, the fuel cut is initiated at a given engine speed slightly greater than an idling speed, and then the throttle valve 23 is opened up to a predetermined opening degree for a given time period, so as to achieve sufficient scavenging in each of the cylinders 12A to 12D. Then, the throttle valve 23 is closed at a predetermined appropriate timing. Through this operation, an air volume to be charged in each of the stop-state expansion-stroke cylinder 12B and the stop-state compression-stroke cylinder 12A is sufficiently increased, and the air volume in the stop-state expansion-stroke cylinder 12B becomes slightly greater than that in the stop-state compression-stroke cylinder 12A. Thus, due to an imbalance between respective pressures of compressed air in the two cylinders 12A and 12B to be driven during the aromatic restart control, the piston 13 of the stop-state expansion-stroke cylinder 12B will be stropped within the non-assisted-combustion-restart enabling stop range R slightly closer to BDC relative to a midpoint of the expansion stroke, i.e., within a stop range suitable for the automatic restart.

The assisted-combustion-restart enabling stop ranges A1 and A2 means a range of piston stop position which enables the engine 1 to be automatically restarted with assistance of a starter motor (not shown), i.e., by a combination of combustion and the starter motor.

The combustion-restart disenabling ranges NG1 and NG2 means a range of piston stop position which disenables the engine 1 to be automatically restarted through the reverse-rotational restart process based on combustion.

In the automatic stop control, the control unit 2 is operable to estimate a stop range and then set a stop-range ID flag F_{ST} so as to identify an estimated one of the stop ranges R, A1, A2, NG1, and NG2. Then, the automatic restart control will be performed depending on the stop-range ID flag F_{ST}, as described later. The stop-range ID flag F_{ST} indicates a piston stop position of the engine 1 in the automatic stop state. Specifically, when the stop-range ID flag F_{ST} is set at "0", it indicates that the piston 13 is stopped within the non-assisted-combustion-restart enabling stop range R. When the stop-range ID F_{ST} is set at a value other than "0", it indicates that the piston 13 is stopped at a position out of the non-assisted-combustion-restart enabling stop range R. An initial value of the stop-range ID F_{ST} is set at "0".

The automatic restart control for automatically restarting the engine 1 in the automatic stop state will be specifically described below.

Referring to FIGS. 4A to 4D, the automatic restart control is fundamentally configured to restart the engine 1 by its own ability without any assistance of a starter motor (not shown). Specifically, as schematically shown in FIGS. 4A to 4D, in this embodiment, combustion is initially carried out in the stop-state compression-stroke cylinder 12A to push the piston 13 of the cylinder 12A downwardly and rotate the crankshaft 3 reversely by a small angle (see FIG 4A), so that the piston 13 of the stop-state expansion-stroke cylinder 12B is moved upwardly to compress an air-fuel mixture in the cylinder 12B. Then, the air-fuel mixture in the stop-state expansion-stroke cylinder 12B which has been compressed in the above manner and increased in pressure and temperature is ignited to carry out combustion so as to restart the engine based on combustion torque given to the crankshaft 3 in a normal rotation direction. This restart of the engine 1 by its own ability can be achieved only if the combustion torque of the stop-state expansion-stroke cylinder 12B to be given to the crankshaft 3 in the normal rotation direction is maximized to allow the piston 13 of the stop-state compression-stroke cylinder 12A to overcome a reaction force (compression pressure) of compressed air in the cylinder 12A and pass beyond TDC of the compression stroke. Thus, it is requited for the stop-state expansion-stroke cylinder 12B to ensure a sufficient volume of air for the combustion so as to reliably restart the engine 1. On the other hand, the substantial volume of air in the stop-state expansion-stroke cylinder 12B hinders the air from being strongly compressed during the reverse rotation operation in the automatic restart control. The reason is that a reaction force of the compressed air acts in a direction for pushing the piston 13 of the stop-state expansion-stroke cylinder 12B.

With this point of view, the automatic restart control in this embodiment is configured to retard a timing of fuel injection for the stop-state expansion-stroke cylinder 12B so as to increase a compression level (density) of air in the stop-state expansion-stroke cylinder 12B. Specifically, when the fuel injection timing is retarded, fuel is injected into the cylinder after the in-cylinder air is compressed to some degree, and the compression pressure is lowered by a latent heat of vaporization of the injected fuel. Thus, under the condition that the stop-state compression-stroke cylinder 12A produces a constant amount of combustion energy acting in the reverse rotation direction, the piston 13 of the stop-state expansion-stroke cylinder 12B can be moved closer to TDC of the expansion stroke (i.e., a displacement of the piston can be increased) to further increase the density of the compressed air.

After initiation of the normal rotation operation, a reaction force of burnt gas remaining in the stop-state compression-stroke cylinder is likely to cause a loss of the combustion torque for the normal rotation. With this point of view, the automatic restart control in this embodiment is configured to inject fuel into the stop-state compression-stroke cylinder 12A at a timing after the combustion in the stop-state expansion-stroke cylinder 12B so as to lower an in-cylinder pressure of the stop-state compression-stroke cylinder 12A subjected to the reverse rotation operation, by a latent heat of vaporization of the injected fuel, to suppress a loss of the combustion torque (see FIG. 4C).

Further, in the stop-state intake-stroke cylinder 12C which undergoes a compression stroke after the combustion in the stop-state expansion-stroke cylinder 12B, an ignition timing is retarded to carry out ignition after TDC of the compression stroke so as to prevent occurrence of the so-called engine racing (see FIG 4D).

When the engine 1 is automatically restarted in the above manner after being stopped in a forced manner, if self-ignition occurs in the cylinder (particularly, stop-state intake-stroke cylinder) which undergoes a compression stroke after the combustion in the stop-state expansion-stroke cylinder 12B, a large reaction force is imposed on the piston of this cylinder to cause knocking, resulting in failing in the automatic restart. With a view to preventing the occurrence of such self-ignition, various measures are made in the combustion-based automatic restart control in this embodiment.

One of the measures against the self-ignition is to manage an in-cylinder temperature.

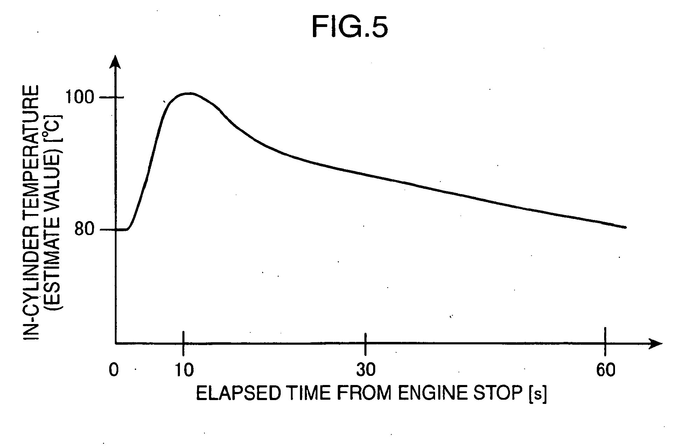

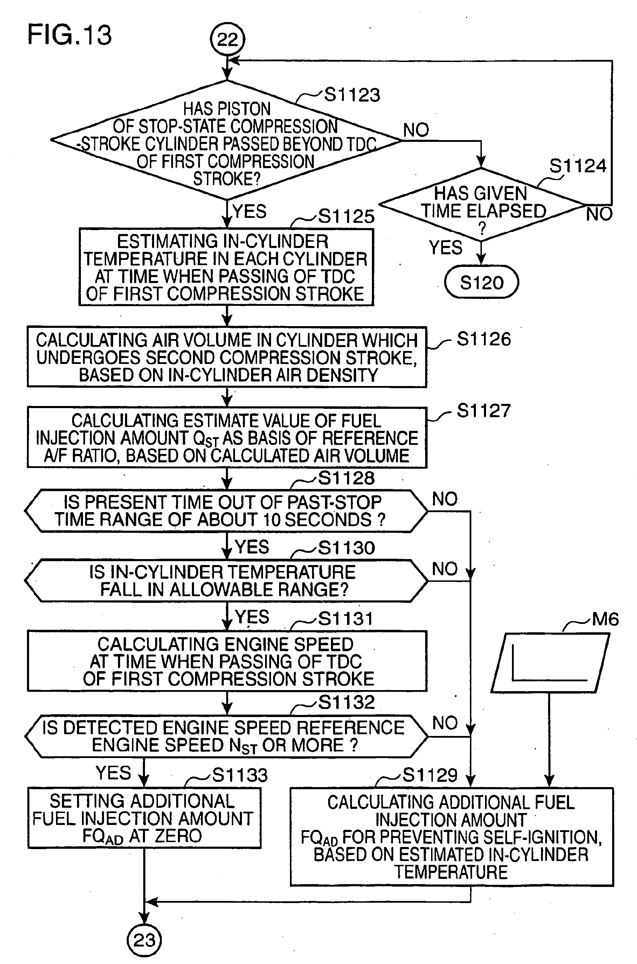

Referring to FIG. 5, after the engine is completely stopped, an in-cylinder temperature in each of the cylinders 12A to 12D will be changed according to a temperature characteristic illustrated in the figure. That is, when the engine 1 is completely stopped through the automatic stop control, a flow of engine coolant is also stopped, and thereby the in-cylinder temperature will be rapidly increased just after the engine stop. A peak of the in-cylinder temperature appears after about 10 seconds from the engine stop, and then the in-cylinder temperature will gradually falls off. While a level of this characteristic is varied depending on a coolant temperature (temperature of engine coolant), an outside air temperature (intake-air temperature) and other factors, it can be determined by an experimental test or the like with respect to each specification of the engine 1. Accordingly, the control unit 2 stores a map which is formed from the temperature characteristics shown in FIG.5 taking account of individual specificity of the corresponding engine 1, so that a time period of about 10 seconds after the engine stop is defined as a specific post-stop time range. In an operation as one of the measures for preventing the occurrence of self-ignition, when an intake-air temperature in the intake passage of the engine 1 is rapidly increased in the specific post-stop time range, this state is determined as warm-up. Further, it is determined that the in-cylinder temperature is higher as a time point in the automatic restart control is closer to the specific post-stop time range. In this embodiment, a control map M6 in FIG. 13 corresponds to a map representing the characteristic curves as shown in FIG 5.

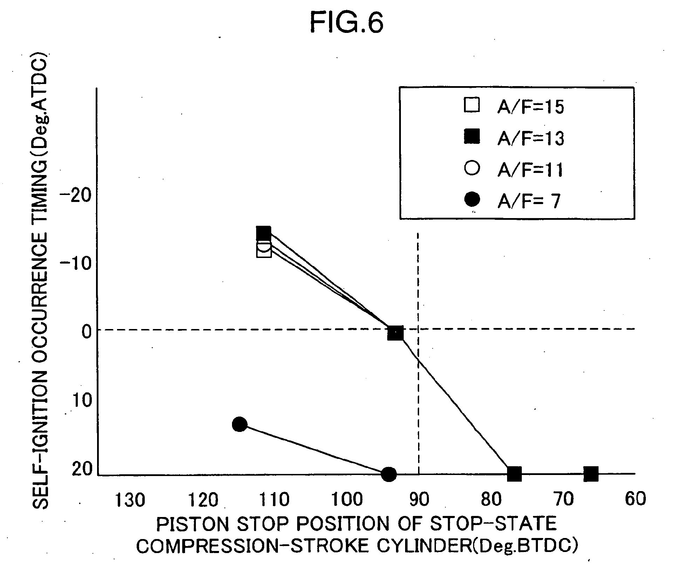

Through experimental tests made by the inventors, it was proven that, if there is unburnt fuel in the stop-state compression-stroke cylinder 12A when a piston stop position of the stop-state compression-stroke cylinder 12A is located closer to BDC relative 90 CA degrees before TDC in the warm-up state (state when the intake-air temperature sensor 29 has a detection value of 100°C or more), self-ignition is more likely to occur in the stop-state compression-stroke cylinder 12A after the combustion in the stop-state expansion-stroke cylinder 12B, irrespective of an air-fuel ratio of an air-fuel mixture in the stop-state compression-stroke cylinder 12A, as shown in FIG. 6. Thus, in this embodiment, when the piston 13 of the stop-state compression-stroke cylinder 12A is located in the range of greater than θ3 to θ4 within the aforementioned combustion-restart enabling stop range, the automatic restart control is configured to restart the engine 1 after the piston position is corrected. Further, after completion of the combustion in the stop-state expansion-stroke cylinder 12B, fuel is injected into the stop-state compression-stroke cylinder 12A to lower an in-cylinder pressure of the cylinder 12A by a latent heat of vaporization of the injected fuel. In this operation, the automatic restart control is configured to omit the additional fuel injection in a certain condition, or carry out the additional fuel injection for preventing the occurrence of self-ignition in the stop-state compression-stroke cylinder 12A.

Another factor requiring some measures for self-ignition is fuel leakage. In the direct-injection gasoline engine having the fuel injection valve 16 exposed to the combustion chamber 14, as in this embodiment, when the engine 1 is in the automatic stop state, fuel leaking from the nozzle hole of the fuel injection valve 16 is vaporized to form an air-fuel mixture in each of cylinders 12A to 12D. This air-fuel mixture is likely to cause self-ignition in the stop-state intake-stroke cylinder 12C during the automatic restart.

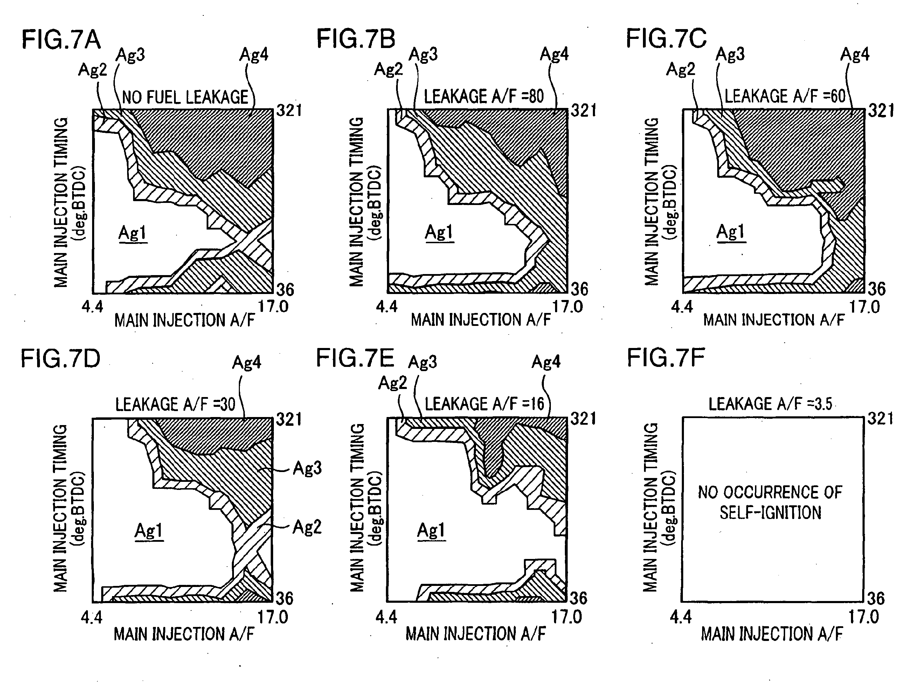

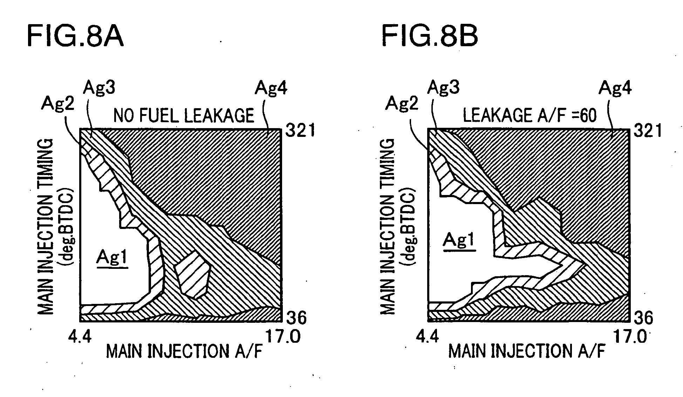

FIGS. 7A to 7F and FIGS. 8A and 8B are graphs showing a relationship between fuel injection timing and self-ignition for each fuel leakage amount during a compression stroke of the stop-state intake-stroke cylinder 12C. In these figures, Ag 1 indicates a fuel injection timing range where no self-ignition has occurred, and each of Ag 2 to Ag 4 indicates a fuel injection timing range where self-ignition has occurred. The Ag 2 is in the range of 10 to 20 CA degrees after TDC, and the Ag 3 is in the range of 0 to 10 CA degrees after TDC. The Ag 4 is in the range of 10 to 0 CA degrees before TDC. The graphs of FIGS. 7A to 7F are data measured when an intake-air temperature in the surge tank 21b is 75°C, and the graphs of FIGS. 8A and 8B are data measured when the intake-air temperature in the surge tank 21b is 100°C.

As shown in FIGS. 7A to 7F, when there is no fuel leakage, an area of the Ag 4 liable to cause self-ignition is apt to become wider as the fuel injection timing is earlier than an intermediate timing (about 96 CA degrees) of the compression stroke. On the other hand, when an amount of fuel leakage is increased (30 or less in A/F), an over-rich air-fuel mixture is formed, and thereby self-ignition becomes unlikely to occur. Comparing between FIG 7A and FIG. 8A and between FIG. 7C and FIG. 8B, when the intake-air temperature is increased even if the amount of fuel leakage is constant, the area of the Ag 4 liable to cause self-ignition is apt to become wider. Thus, in this embodiment, when fuel is injected at an intermediate timing of a compression stroke, particularly at the timing of about 96 CA degrees before TDC of the compression stroke, additional fuel is injected into the stop-state intake-stroke cylinder 12C depending on an amount of fuel leakage, so as to prevent the occurrence of self-ignition.

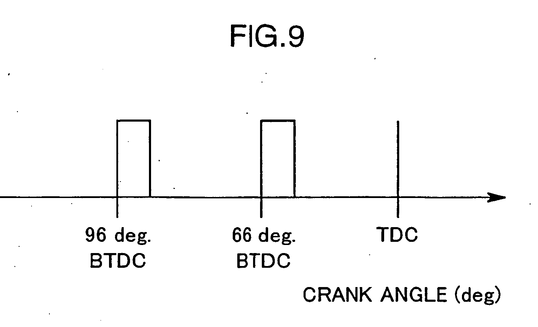

As shown in FIG. 9, in this embodiment, when fuel is injected into the stop-state intake-stroke cylinder 12C which undergoes a compression stroke for the first time after initiation of the automatic restart, a 1st-stage fuel injection is carried out at a first timing of the compression stroke, and then a 2nd-stage fuel injection is additionally carried out at a second timing of the compression stroke. In this case, a total fuel injection amount is set such that an in-cylinder air-fuel ration falls within a combustible range (a rich limit value: 5 or more). An amount of fuel in the second-stage fuel injection is specifically set based on the control map M6 in FIG. 13.

A process of the automatic restart control will be described below.

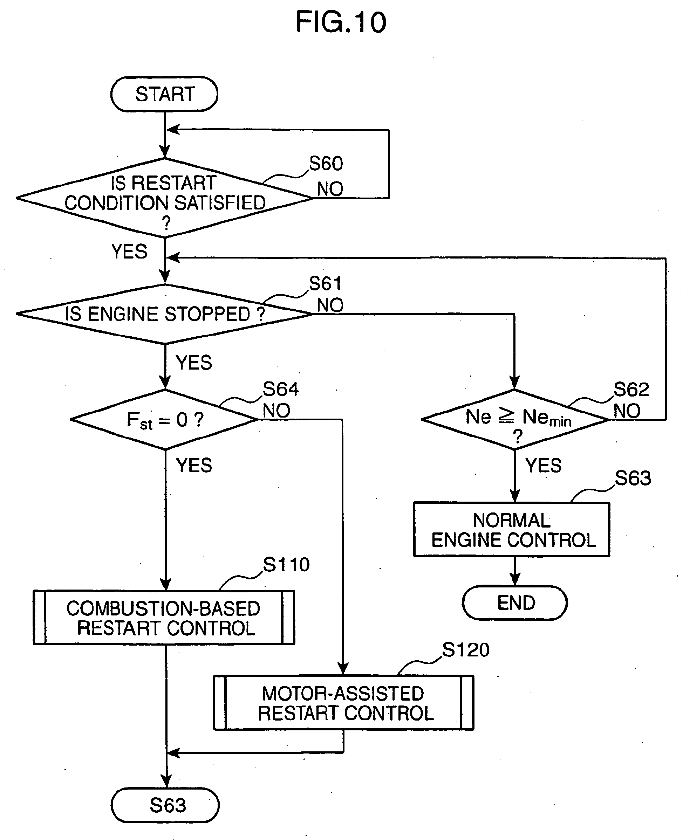

Referring to FIG. 10, while the automatic restart control in this embodiment is fundamentally intended to restart the engine 1 by its own ability as mentioned above, it is configured to use a starter motor in combination as a fail-safe function, as needed or on a steady basis.

In the flowchart of FIG. 10, the control unit 2 firstly determines whether an automatic restart condition is satisfied (Step S60). The restart condition includes a driver's action to start moving a vehicle, such an operation of releasing a brake or depressing an accelerator pedal, and an activation of an in-vehicle device requiring an engine operation, such as an in-vehicle air conditioner. When the restart condition is satisfied, it is determined whether the engine 1 is stopped (Step S61). If the accelerator pedal is depressed when the engine 1 is not stopped, it is determined whether the engine speed Ne reaches a predetermined threshold engine speed Neₘᵢₙ (Step S62). In Step S62, if the engine speed Ne does not reach the threshold engine speed Neₘᵢₙ, the automatic restart control will be kept in a standby state until the engine is stopped. When the engine speed Ne reaches the threshold engine speed Neₘᵢₙ, the automatic restart control shifts to a normal engine control (Step S63), and the process is terminated.

When it is determined in Step S61 that the engine 1 is stopped, the stop-range ID F_{ST} is set in accordance with the detection of piston stop position of the engine 1. Then, it is determined whether the engine 1 is stopped in a state requiring the assistance of the starter motor (Step S64). When the assistance of the starter motor is not required (the determination in Step S64 is YES), a combustion-based restart control subroutine (Step S110) is executed. When the assistance of the starter motor is required (the determination in Step S64 is NO), a motor-assisted restart control subroutine (Step S120) is executed. The motor-assisted restart control subroutine S120 itself may be executed using a conventional control technique, and its detailed description will be omitted.

The combustion-based restart control subroutine S110 will be specifically described below.

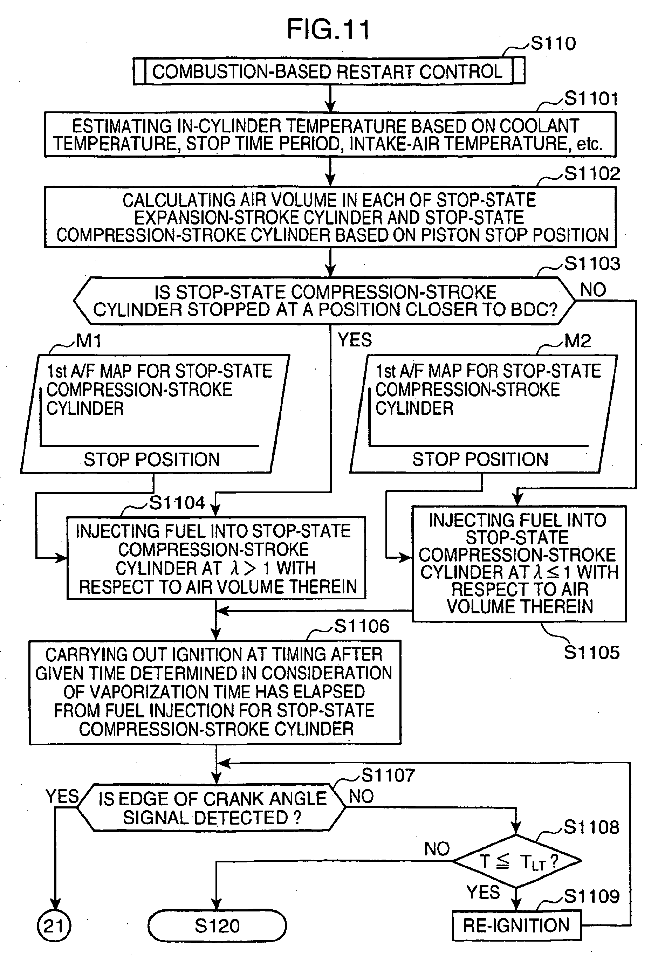

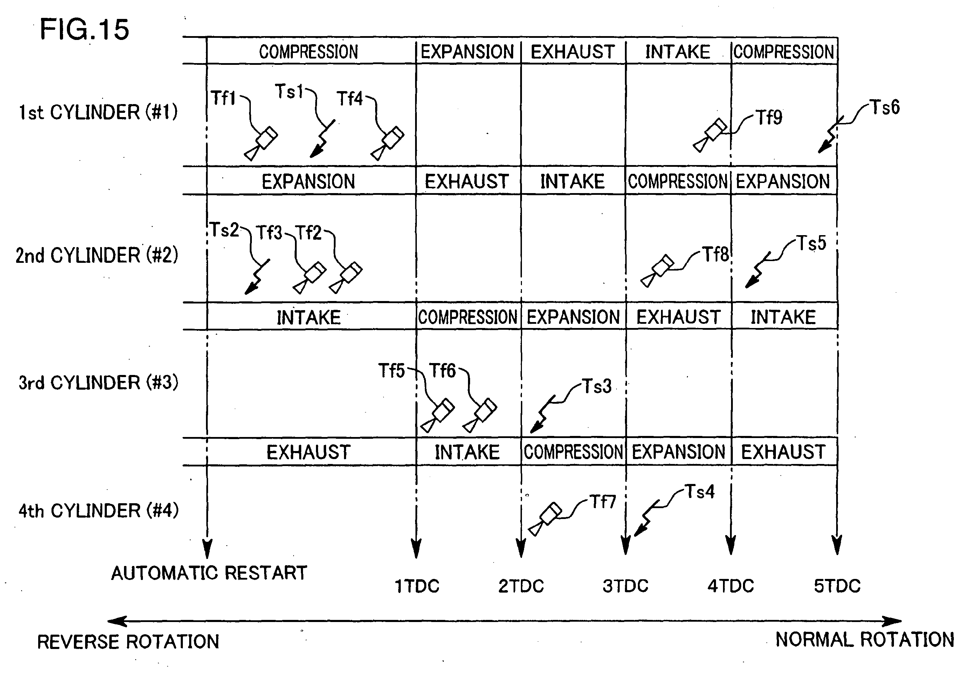

Referring to FIGS. 11 and 15, the control unit 2 estimates an in-cylinder temperature of each of the cylinders 12A to 12D based on a coolant temperature, a stop time-period, an intake-air temperature and others (Step 1101). Then, the control unit 2 calculates an air volume in each of the stop-state compression-stroke cylinder 12A and the stop-state expansion-stroke cylinder 12B based on a detected stop position of the piston 13 thereof (Step S1102). Specifically, a combustion chamber volume in each of the stop-state compression-stroke cylinder 12A and the stop-state expansion-stroke cylinder 12B is firstly calculated based on the stop positions of the pistons 13. In the automatic stop state, the stop-state expansion-stroke cylinder 12B is also charged with fresh air because the engine crankshaft is rotated several times in a time period from the interruption of the fuel injection according to the automatic stop control through until the engine is stopped, and each of the stop-state compression-stroke cylinder 12A and the stop-state expansion-stroke cylinder 12B has an in-cylinder pressure which is increased to approximately atmospheric pressure after the engine stop. Thus, the fresh air volume in each of the cylinders 12A, 12B can be calculated based on the calculated combustion-chamber volume.

Then, the control unit 2 determines whether the stop-state compression-stroke cylinder 12A is stopped at a position relatively closer to BDC within the non-assisted-combustion-restart enabling stop range R (60 to 80 CA degrees before TDC of the compression stroke), based on the read stop-range ID flag F_{ST} and the calculated air volume in Step S1102 (Step S1103).

When the determination in Step S1103 is YES, the process advances to Step S1104. In Step S1104, the control unit 2 operates to inject fuel into the stop-state compression-stroke cylinder 12A (this fuel injection will hereinafter be referred to as "1st fuel injection") in such a manner that an air-fuel mixture is formed at a given air-fuel ratio (e.g. about 20) equivalent to an excess air ratio λ (air-fuel ratio/theoretical air-fuel ratio) > 1, with respect to the air volume of the stop-state compression-stroke cylinder 12A calculated in Step S1102. This air-fuel ratio is derived from a 1st A/F map M1 for the stop-state compression-stroke cylinder 12A which is preset in association with piston stop position. Thus, even when the stop-state compression-stroke cylinder 12A has a relatively large air volume, the air-fuel mixture set at a lean air-fuel ratio (λ > 1) will never produce excessive combustion energy to prevent the piston 13 of the stop-state compression-stroke cylinder 12A from being excessively moved in the reverse rotation direction (i.e., from being moved beyond BDC and back to an intake stroke).

When the determination in Step S1103 is NO, the process advances to Step S1105. In Step S1105, the control unit 2 operates to inject fuel into the stop-state compression-stroke cylinder 12A (1st fuel injection: Tf1 in FIG. 15) in such a manner that an air-fuel mixture is formed at a given air-fuel ratio equivalent to λ≤ 1, with respect to the air volume of the stop-state compression-stroke cylinder 12A calculated in Step S1102. This air-fuel ratio is derived from a 1st A/F map M2 for the stop-state compression-stroke cylinder 12A which is preset in association with piston stop position. Thus, even when the stop-state compression-stroke cylinder 12A has a relatively small air volume, the air-fuel mixture set at a theoretical or rich air-fuel ratio (λ ≤ 1) can produce adequate combustion energy for the reverse rotation.

After termination of Step S1104 or S1105, the process advances to Step S1106. In Step S1106, the control unit 2 operates to carry out ignition for the stop-state compression-stroke cylinder 12A at a timing (Ts1 in FIG. 15) when a given time determined in consideration of a time period required for the injected fuel to be vaporized (vaporization time) has elapsed from the 1st fuel injection. Then, based on whether an edge of a detection signal from the crank angle sensor 30 or 31 (a rising or falling edge of a crank angle signal therefrom) is detected within a predetermined time period T_{LT} after the ignition, the control unit 2 determines whether the piston 13 is moved (Step S1107).

When the determination in Step S1107 is YES, i.e., it is determined that the piston 13 is moved, the process advances to a next step.

When the determination in Step S1107 is NO, i.e., it is determined that the piston 13 is not moved due to misfire, the control unit 2 determines whether an elapsed time T after the ignition (post-ignition time) is less than the predetermined time period T_{LT} (Step S1108). If the determination in Step S1108 is YES, a re-ignition will be repeatedly carried out for the stop-state compression-stroke cylinder 12A (Step S1109). When the post-ignition time T exceeds the predetermined time period T_{LT} in Step S1108, the process shifts to the motor-assisted restart control subroutine S120.

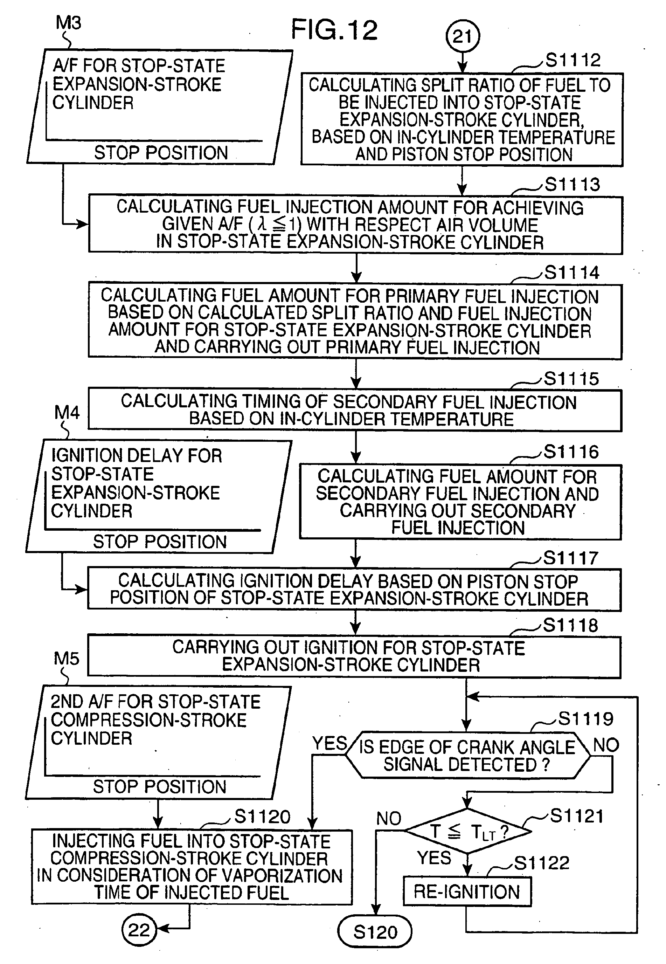

Referring to FIGS. 12 and 15, when the determination in Step S1107 is YES, i.e., it is determined that the piston 13 is moved, the control unit 2 calculates a split ratio (between a preceding (primary) fuel injection and a subsequent (secondary) fuel injection) in a split fuel injection for the stop-state expansion-stroke cylinder 12B (Step S1112). A percentage of the subsequent fuel injection is increased as the piston stop position of the stop-state expansion-stroke cylinder 12B is located closer to BDC, and the in-cylinder temperature is higher.

Then, the control unit 2 calculates a total fuel injection amount for the stop-state expansion-stroke cylinder 12B in such a manner that an air-fuel mixture is formed at a given air-fuel ratio (λ ≤ 1) with respect to the air volume of the stop-state expansion-stroke cylinder 12B calculated in Step S1102 (Step S1113). This air-fuel ratio is derived from an A/F map M3 for the stop-state expansion-stroke cylinder 12B. In this embodiment, during the calculation in Step S1112, a correction based on a fuel leakage amount is made using a fuel leakage characteristic table.

Then, based on the split ratio calculated in Step S1112 and the total fuel injection amount calculated in S1113, the control unit 2 calculates a preceding (primary) fuel injection amount for the stop-state expansion-stroke cylinder 12B, and operates to inject fuel in the calculated amount (Step S1114: Tf2 in FIG. 15).

Then, based on the in-cylinder temperature calculated in Step S1101, the control unit 2 calculates a subsequent (secondary) fuel injection timing for the stop-state expansion-stroke cylinder 12B (Step S1115). This secondary fuel injection timing is set to correspond to a timing when the in-cylinder air is being compressed after the piston 13 of the stop-state expansion-stroke cylinder 12B starts being moved toward TDC (in the reverse rotation direction), and is set to allow a compression pressure to be effectively lowered by a latent heat of vaporization of injected fuel in the secondary fuel injection, while adequately ensuring a vaporization time for the injected fuel (i.e., a timing after the piston 13 is moved to a position closer to TDC).

Then, the control unit 2 calculates a fuel injection amount at the secondary fuel injection timing calculated in Step S1115, and instructs the fuel injection valve 16 to inject fuel in the calculated amount (Step S1116: Tf3 in FIG. 15). After the secondary fuel injection for the stop-state expansion-stroke cylinder 12B, the control unit 2 drives the spark plug 15 at a timing after an elapse of a predetermined delay time (Steps S117, S1118; Ts2 in FIG. 15). The predetermined delay time is derived from an ignition delay map M4 for the stop-state expansion-stroke cylinder 12B which is preset in association with piston stop position. According to this initial combustion in the stop-state expansion-stroke cylinder 12B, the engine starts being operated in a normal rotation direction instead of the reverse rotation direction. Thus, the piston 13 of the stop-state compression-stroke cylinder 12A starts being moved toward TDC to compress in-cylinder gas (burnt gas as a product of the combustion caused by the ignition in Step S1106)

After the ignition for the stop-state expansion-stroke cylinder 12B in Step S1118, the control unit 2 operates to carry out ignition once again, and then determines whether an edge of a detection signal from the crank angle sensor 30 or 31 (a rising or falling edge of a crank angle signal therefrom) is detected within a predetermined time period T_{LT} after the second ignition, the control unit 2 determines whether the piston 13 is moved (Step S1119). When the determination in Step S1119 is YES, i.e., it is determined that the piston 13 is moved, the control unit 2 operates to carry out 2nd fuel injection for the stop-state compression-stroke cylinder 12A in consideration with a vaporization time of injected fuel (Step S1120: Tf4 in FIG. 15), and then the process advances to a next step. An amount of fuel in the 2nd fuel injection is derived from a 2nd A/F map M5 for the stop-state compression-stroke cylinder 12A, in such a manner that an overall air-fuel ratio based on a total fuel amount in the 1st and 2nd fuel injections becomes richer (e.g., about 6) than a combustible air-fuel ratio (lower limit value: 7 to 8). A latent heat of vaporization of the injected fuel in the 2nd fuel injection lowers a compression pressure in the vicinity of TDC of the compression stroke (occurring first after initiation of the automatic restart control) which is undergone by the stop-state compression-stroke cylinder 12A, so that the stop-state compression-stroke cylinder 12A can readily overcome the first compression stroke, i.e., the piston 13 of the stop-state compression-stroke cylinder 12A can pass beyond TDC of the first compression stroke without difficulty. The 2nd fuel injection Tf4 for the stop-state compression-stroke cylinder 12A is made solely for the purpose of lowering the compression pressure, and therefore no ignition/combustion for 2nd fuel injection Tf4 is carried out (self-ignition never occurs because of the air-fuel mixture richer than the combustible air-fuel ratio). This incombustible air-fuel mixture will be purified through a reaction with oxygen stored in the catalyst 37 in the exhaust passage 22.

When the determination in Step S1119 is NO, i.e., it is determined that the piston 13 is not moved due to misfire, the control unit 2 determines whether an elapsed time T after the ignition in Step S1118 (post-ignition time) is less than the predetermined time period T_{LT} (Step S1121). If the determination in Step S1121 is YES, a re-ignition will be repeatedly carried out for the stop-state expansion-stroke cylinder 12B (Step S1122). When the post-ignition time T exceeds the predetermined time period T_{LT} in Step S1121, the process shifts to the motor-assisted restart control subroutine S120.

Referring to FIGS. 13 and 15, after completion of the fuel injection in Step S1120, the control unit 2 determines whether the stop-state compression-stroke cylinder 12A overcomes the compression stroke, i.e., the piston 13 of the stop-state compression-stroke cylinder 12A passes beyond TDC of the compression stroke (Step S1123). If the passing is not determined, the control unit 2 will determine whether a given time has elapsed after the fuel injection (Step S1124). If NO, the process will return to Step S1123. If the piston 13 of the stop-state compression-stroke cylinder 12A does not pass beyond TDC of the compression stroke even after the given time has elapsed, the process will shifts to the motor-assisted restart control subroutine S120.

Then, second combustion next to the initial combustion in the stop-state expansion-stroke cylinder 12B is carried out in the stop-state intake-stroke cylinder 12C, because the air-fuel mixture formed by the 2nd fuel injection for the stop-state compression-stroke cylinder 12A is not burnt, as described above. A part of energy of the initial combustion in the stop-state expansion-stroke cylinder 12B is used for allowing the stop-state intake-stroke cylinder 12C to overcome a compression stroke which occurs second after the initiation of the automatic restart control, i.e., for allowing the piston 13 of the stop-state intake-stroke cylinder 12C to pass beyond TDC of the second compression stroke. That is, the initial combustion energy in the stop-state expansion-stroke cylinder 12B is used both for allowing the piston 13 of the stop-state compression-stroke cylinder 12A to pass beyond the TDC of the first compression stroke and then allowing the piston 13 of the stop-state intake-stroke cylinder 12C to pass beyond TDC of the second compression stroke.

Thus, in view of achieving smooth automatic restart, it is desirable to minimize a load when the piston 13 of the stop-state intake-stroke cylinder 12C to pass beyond TDC of the second compression stroke. This allows the piston 13 of the stop-state intake-stroke cylinder 12C to pass beyond TDC of the second combustion stroke by small energy. The following description will be made for a control process of carrying out combustion in the second combustion stroke so as to allow the piston 13 of the stop-state intake-stroke cylinder 12C to pass beyond TDC of the second combustion stroke by small energy.

Firstly, at a time when the piston 13 of the stop-state compression-stroke cylinder 12A passes beyond TDC of the first compression stroke, the control unit 2 estimates the in-cylinder temperature once again (Step S1125). This estimation of the in-cylinder temperature is intended to prevent the occurrence of self-ignition in the stop-state intake-stroke cylinder 12C. Specifically, if self-ignition occurs in the stop-state intake-stroke cylinder 12C, resulting combustion produces a force (reverse torque) of pushing back the piston 13 toward BDC before the piston 13 reaches TDC of the second compression stroke. This force undesirably causes increase in energy consumption required for passing beyond TDC of the second combustion stroke. Further, at a time just before the stop-state intake-stroke cylinder 12C undergoes the second compression stroke, the engine speed Ne is fairly lowered because only a part of the initial combustion energy in the stop-state expansion-stroke cylinder 12B remains. Thus, fresh air introduced in the stop-state intake-stroke cylinder 12C is heated to a relatively high temperature, and likely to create an environment causing self-ignition. In order to take measures against such self-ignition, the control unit 2 in this embodiment is designed to estimate the in-cylinder temperature once again at a time when the piston 13 of the stop-state compression-stroke cylinder 12A passes beyond TDC of the first compression stroke.

Then, the control unit 2 estimates an in-cylinder air density, and calculates an air volume in the stop-state intake-stroke cylinder 12C based on the estimate value (Step S1126).

Based on the air volume estimated in Step S1126, the control unit 2 then calculates a fuel injection amount Q_{ST} serving as the basis of a reference air-fuel ratio (Step S1127). This fuel injection amount Q_{ST} is calculated to allow the reference air-fuel ratio to be set in the range of 10 to 15, i.e., to be set as a so-called power air-fuel ratio. Thus, in this embodiment, a relatively high power can be obtained from combustion in the stop-state intake-stroke cylinder 12C.

Then, the control unit 2 determines whether a present time is out of a time range of about 10 second after the engine 1 is automatically stopped (Step S1128). When the present time falls within the post-stop time range, there is a high probability that the intake-air temperature is significantly high. Thus, in this case, the control unit 2 in this embodiment is operable to immediately calculate an additional fuel injection amount FQ_{AD} for preventing the occurrence of self-ignition, based on the estimated in-cylinder temperature so as to inject fuel into the stop-state intake-stroke cylinder 12C to form a air-fuel mixture at an air-fuel ratio richer than the reference air-fuel ratio (Step S1129). This makes it possible to quickly calculate the additional fuel injection amount FQ_{AD} so as to reliably prevent the occurrence of self-ignition.

Further, the calculation of the additional fuel injection amount in Step S 1129 is performed to achieve a multi-stage injection as shown in FIG. 9. Specifically, this calculation is performed such that an in-cylinder air-fuel ratio becomes richer as the engine speed Ne has a lower value, while referring to data of the control map M6 for the multi-stage injection in FIG. 9.

In Step S1128, meanwhile, when the elapsed time after the automatic stop is out of the post-stop time range of about 10 second, the necessity of the measures against self-ignition is determined once again based on the in-cylinder temperature calculated in Step S1125 (Step S1131). If the in-cylinder temperature is out of a predetermined allowable temperature range, Step S1129 and subsequent steps will be executed.

When it is determined in Step S1131 that the in-cylinder temperature falls within the predetermined allowable temperature range, the engine speed Ne at a time when the piston 13 of the stop-state compression-stroke cylinder 12A passes beyond TDC of the first compression stroke is calculated (Step S1132), and it is determined whether the calculated engine speed Ne is equal to or grater than a predetermined reference engine speed N_{ST} (Step S1133). In Step S1133, if the calculated engine speed Ne is equal to or grater than the reference engine speed N_{ST}, the control unit 2 sets a value of the additional fuel injection amount FQ_{AD} at zero (Step S1134). That is, no fuel is added to the fuel injection amount Q_{ST} set in Step S1127. When the calculated engine speed Ne is less than the reference engine speed N_{ST}, the process advances to Step S1129, and the control unit 2 calculates the additional fuel injection amount FQ_{AD} depending on the engine speed Ne. Then, the process will advance to Step S1130 and subsequent steps.

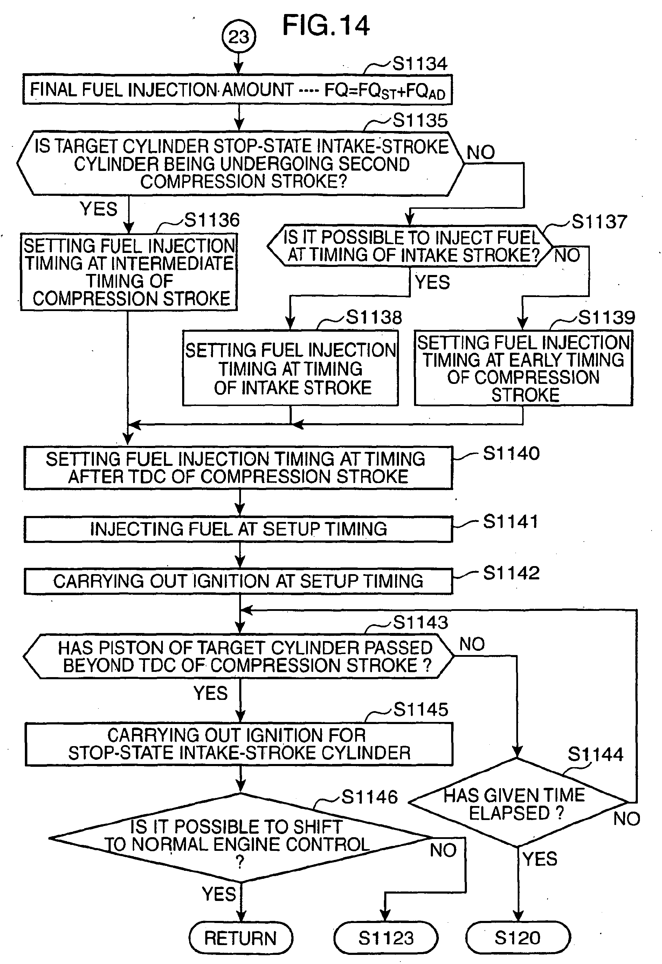

Referring to FIGS. 14 and 15, after completion of the calculation of the additional fuel injection amount FQ_{AD} in Step S1133 or S1129, a final fuel injection amount FQ is calculated by adding the additional fuel injection amount FQ_{AD} to the fuel injection amount Q_{ST} serving as the basis of the reference air-fuel ratio (Step S1134).

Then, the control unit 2 carries out an operation of determining a fuel injection timing of the calculated final fuel injection amount FQ of fuel.

Specifically, it is determined whether a target cylinder which is undergoing a compression stroke, i.e., to be subjected to a fuel injection next, is the stop-state intake-stroke cylinder 12C which is undergoing a compression stroke for the first time after initiation of the automatic restart control (Step S1135). If the determination is YES, the fuel injection timing is set at an intermediate timing (about 96 CA degrees) of the compression stroke of the stop-state intake-stroke cylinder 12C (Step S1136). When the target cylinder is not the stop-state intake-stroke cylinder 12C, or the stop-state intake-stroke cylinder 12C which is undergoing a compression stroke for the second time or for the more time after initiation of the automatic restart control, it is determined whether fuel injection can be carried out at a timing of an intake stroke (Step S1137). As to this process, a conventional system is designed such that, when a target cylinder is the stop-state intake-stroke cylinder 12C or the later one, it is judged that the target cylinder has no risk of self-ignition, and the fuel is injected into only the stop-state intake-stroke cylinder 12C to facilitate increasing torque. However, through various researches made by the inventors of the present invention, it appears that, under the conditions that the engine has a significantly low engine speed and/or a significantly high intake-air temperature, self-ignition is likely to occur even in the stop-state exhaust-stroke cylinder 12D. Thus, in this embodiment, the fuel injection timing is also checked for any cylinder which undergoes a compression stroke for the first time even after the stop-state intake-stroke cylinder 12C overcomes a compression stroke for the first time after initiation of the automatic restart control. Further, as described in connection with the graph of FIG. 9 and Step S1129 in FIG. 13, when the stop-state intake-stroke cylinder 12C is undergoing a compression stroke for the first time after initiation of the automatic restart control, the multi-stage injection is carried out for the stop-state intake-stroke cylinder 12C at two timings (see Tf5 and Tf6 in FIG. 15) of this compression stroke.

In Step S1137, similar determinations to Steps S1128 to S1133 are made, and it is further determined whether fuel injection can be carried out for the target cylinder at a current stroke. Further when it is determined that the target cylinder has no risk of self-ignition in view of the engine speed Ne and the in-cylinder temperature, and the fuel injection timing is set at a timing of the intake stroke of the target cylinder (Step S1138). If at least either one of the above requirements is not satisfied, the fuel injection timing will be set at an early timing of a compression stroke of the compression stroke (Step S1139). In this manner, in a given engine operation condition, the fuel injection timing is set at a timing of the intake stroke of the target cylinder so as to facilitate vaporization/ atomization to achieve enhanced fuel economy and exhaust emission performance. Further, in an engine operation condition which is likely to cause self-ignition, the fuel injection timing is retarded to inject fuel at a timing of the compression stroke so as to reliably prevent the occurrence of self-ignition.

Then, the control unit 2 operates to retard an ignition timing so as to carry out ignition at a timing after TDC of the compression stroke of the target cylinder (Step S1140). This is intended to prevent the occurrence of engine racing, i.e., rapid increase of the engine speed Ne, during the automatic restart which is a transient state of the engine 1.

Then, the control unit 2 operates to inject fuel at either one of the fuel injection timings determined in Steps S1136 to S1139 (Step S1141; Tf5, Tf6 in FIG. 15), and to activate the spark plug 15 at the ignition timing setup in Step S1140 (Step S1142; Ts 3 in FIG. 15).

After the ignition, the control unit 2 waits for a given time until the piston 13 of a target one of the cylinders (in this state, the stop-state intake-stroke cylinder 12C) passes beyond TDC of the second compression stroke (Step S1143, S1144). If the piston 13 does not pass beyond TDC of the second compression stroke even after an elapse of a given time, the process shifts to the motor-assisted restart control subroutine S120. In Step S1143, when the piston 13 passes beyond TDC of the second compression stroke, the control unit 2 operates to activate the spark plug 15 (Step S1145: Ts3 in FIG. 15). In this embodiment, the ignition timing to be set in Step S1140 is retarded to carry out ignition at a timing after TDC of the compression stroke. This makes it possible to suppress the occurrence of reverse torque.

Then, the control unit 2 determines whether the process can shift to the normal engine control (Step S1146). When the determination is YES, the process returns to the main routine, and shifts to the normal engine control, i.e., Step S63 in FIG 10. In case the process returns to the main routine, the fuel will be injected at a timing of intake stroke and will be ignited immediately before compression TDC, as shown Tf9 and Tf6 in FIG 15.

If it is determined that the process cannot shift to the normal engine control, the process will shifts to Step S1123 so that the control unit 2 determines a fuel injection amount, the necessity of an additional fuel injection, an additional fuel injection amount, a fuel injection timing and an ignition timing (Tf7, Ts4 in FIG. 15) for the cylinder (stop-state exhaust-stroke cylinder 12D) which undergoes a compression stroke third after initiation of the automatic restart control. This makes it possible to reliably prevent the occurrence of self-ignition in the stop-state exhaust-stroke cylinder 12D. The process of executing Step S1123 and subsequent steps in response to the determination result of Step S1146 ends up by the stop-state exhaust-stroke cylinder 12D. That is, in any cylinder which undergoes a compression stroke after the stop-state exhaust-stroke cylinder 12D overcomes the third compression stroke, i.e., the stop-state compression-stroke cylinder 12A which undergoes a compression stroke for the second time after initiation of the aromatic restart control, and the subsequent cylinders, fuel is injected at a timing of an intake stroke in each of these cylinders as shown in FIG. 15 to facilitate enhancing fuel economy.

As mentioned above, in the engine control system according to this embodiment, according to the reverse-rotational restart process, when the automatic restart is conducted, the engine 1 is operated in normal direction by carrying out combustion in the stop-state expansion-stroke cylinder 12B after the operation in the reverse rotation direction by the combustion in the stop-state compression-stroke cylinder 12A to be operated in the normal rotation direction. Then, after the stop-state compression-stroke cylinder 12A, which has been subjected to the combustion, overcomes the first compression stroke, the stop-state intake-stroke cylinder 12C undergoes the second compression stroke. Fuel is injected into the stop-state intake-stroke cylinder 12C at intermediate of the second compression stroke, and ignited at a given timing. In this process, an amount of fuel to be injected into the stop-state intake-stroke cylinder 12C is changed depending on the engine speed Ne detected at a given timing started from the combustion in the stop-state expansion-stroke cylinder 12B (e.g., a time period from initiation of the combustion through until the piston of the stop-state compression-stroke cylinder just passes beyond TDC of the first compression stroke). Specifically, when the engine speed Ne detected at the given timing is relatively low, an in-cylinder air-fuel ratio of the stop-state intake-stroke cylinder 12C is set at a relatively rich value within the combustible range, as described in connection with Step 1129 in FIG 13. Thus, an in-cylinder temperature of the stop-state intake-stroke cylinder 12C can be lowered based on a latent heat of vaporization of injected fuel to facilitate lowering an in-cylinder pressure so as to reliably prevent the occurrence of self-ignition by a synergistic effect with formation of an over-rich air-fuel mixture. When the engine speed Ne is relatively high, self-ignition is less likely to occur. Thus, the fuel injection amount is set such that the in-cylinder air-fuel ratio becomes relatively lean (this does not necessarily mean that the in-cylinder air-fuel ratio is leaner than a theoretical air-fuel mixture), to facilitate enhancing exhaust emission performance.

In this embodiment, the reference air-fuel ratio is set in the range of 11 to 15, and the combustible range set to have a rich limit value of at least 5. As above, the fuel injection timing of the stop-state intake-stroke cylinder 12C most susceptible to self-ignition is set at the intermediate timing of the compression stroke. In combination of this fuel injection timing, the above setting makes it possible to satisfy both the needs for preventing the occurrence of self-ignition and suppressing deterioration in exhaust emission performance, and prevent so-called engine racing.

In this embodiment, as shown in FIGS. 9 and 15, additional fuel is injected into a specific one of the cylinders which undergoes the second compression stroke, i.e., the stop-state intake-stroke cylinder 12C, when the specific cylinder is on the second compression stroke, provided that the extent thereof is an in-cylinder air-fuel ratio of the specific cylinder is within the combustible range. Thus, in this embodiment, under the condition that the engine 1 is operated at a relatively low engine speed, additional fuel is injected into the stop-state intake-stroke cylinder 1C at a timing when the stop-state intake-stroke cylinder 12C is on the second compression stroke, to form a so-called "power-rich air-fuel mixture" therein so as to prevent the occurrence of self-ignition and obtain a higher torque while enhancing an exhaust emission performance.

In this embodiment, the given timing is a moment when a piston of the stop-state compression-stroke cylinder 12A reaches TDC of a compression stroke which occurs first after the initiation of the automatic restart, i.e., the first compression stroke. Thus, in this embodiment, the engine speed Ne is detected at TDC of the compression stroke which allows for reliable detection of the engine speed Ne. This makes it possible to control the air-fuel ratio with a higher degree of accuracy so as to satisfy both the needs for preventing the occurrence of self-ignition and maintaining an adequate exhaust emission performance.

In this embodiment, the control unit 2 has a function of estimating an in-cylinder temperature of the engine 1, and the control unit 2 is operable to estimate an in-cylinder temperature in a time period before the stop-state intake-stroke cylinder 12C overcomes a compression stroke for the first time after the initiation of the automatic restart, and, when the estimated in-cylinder temperature reaches at least a given value, to set the in-cylinder air-fuel ratio in such a manner as to become richer than the reference air-fuel ratio, within the combustible range, irrespective of the value of the engine speed Ne, as described in connection with Step S1128 in FIG. 13. Thus, in this embodiment, when the in-cylinder temperature of the engine 1 is relatively high, the in-cylinder air-fuel ratio is set at a richer value than the reference air-fuel ratio, irrespective of the value of the detected engine speed, to more reliably prevent the occurrence of self-ignition.

In this embodiment, as shown in FIGS. 5 and 13, it is determined that the in-cylinder temperature is higher as an elapsed time after initiation of the automatic stop state of the engine is closer to a given value which is equal to or less than 60 seconds (60 seconds at most). This is based on inventers' knowledge that a charged-air temperature in the cylinder is rapidly increased within a given elapsed time after initiation of the automatic stop state of the engine 1, which is equal to or less than 60 seconds, the control unit 2 is configured to determine that the in-cylinder temperature is higher as an elapsed time after satisfaction of the restart condition is closer to the given elapsed time. This makes it possible to reliably prevent the occurrence of knocking under temperature conditions which are highly likely to cause self-ignition.

Therefore, during engine operation after initiation of the automatic restart under conditions which are likely to cause self-ignition, the engine restart system according to the above embodiment can reliable take measures against self-ignition. Thus, the engine restart system has a remarkable advantage of being able to reliably prevent the occurrence of self-ignition in a cylinder which has not been acknowledged as a problem, to ensure the certainty of engine restart.

## Claims

1. A control system for a multi-cylinder four-cycle engine (1), which is designed to, when a condition for restarting the engine (1) in an automatic stop state is satisfied, operate once the engine (1) in a reverse rotation direction by a given crank angle based on combustion in a stop-state compression-stroke cylinder (12A) which has been on a compression stroke in the automatic stop state, and then operate the engine (1) in a normal rotation direction based on combustion in a stop-state expansion-stroke cylinder (12B) which has been on an expansion stroke in the automatic stop state, so as to automatically restart the engine (1) by means of injecting fuel into said stop-state expansion-stroke cylinder (12B) and driving a spark plug (15), said control system being **characterized by** comprising:
operational-state detection means adapted to detect at least an engine speed and a crank position of each of the cylinders (12A, 12B, 12C, 12D); and
fuel-injection control means adapted to control an amount and a timing of fuel injection for each of the cylinders (12A, 12B, 12C, 12D) based on an engine speed and a crank position detected by said operational-state detection means so as to set a given in-cylinder air-fuel ratio at a given fuel injection timing,
said fuel-injection control means being operable, after initiation of the automatic restart, to set an initial fuel injection timing for a stop-state intake-stroke cylinder (12C) which has been on an intake stroke in the automatic stop state, to allow fuel to be injected when the stop-state intake-stroke cylinder (12C) is at or after an intermediate timing of a compression stroke;
wherein said fuel-injection control means is operable:
to set an in-cylinder air-fuel ratio of said stop-state intake-stroke cylinder (12C) at said initial fuel injection timing in such a manner as to become equal to a given reference air-fuel ratio when an engine speed detected by said operational-state detection means at a given timing counted from the combustion in said stop-state expansion-stroke cylinder (12B) is equal to or higher than a given reference engine speed, and
to set said in-cylinder air-fuel ratio in such a manner as to become richer, within a combustible range, than said reference air-fuel ratio as said detected engine speed has a lower value when said detected engine speed is less than said given reference engine speed.

2. The control system according to claim 1, wherein said reference air-fuel ratio is in the range of 11 to 15 and said combustible range has a rich limit value of at least 5.

3. The control system according to claim 1 or 2, wherein said fuel-injection control means is operable to inject additional fuel into a specific one of the cylinders which undergoes a compression stroke occurring second after the initiation of said automatic restart, when said specific cylinder is on said compression stroke as long as an in-cylinder air-fuel ratio of said specific cylinder is within said combustible range.

4. The control system according to any one of claims 1 to 3, wherein said given timing is a moment when a piston of said stop-state compression-stroke cylinder (12A) reaches a top dead center of a compression stroke which occurs first after the initiation of the automatic restart.

5. The control system according to any one of claims 1 to 4, wherein:
said operational-state detection means has a function of estimating an in-cylinder temperature of the engine; and
said fuel-injection control means is operable, when an in-cylinder temperature estimated by said operational-state detection means in a time period before said stop-state intake-stroke cylinder (12C) overcomes a compression stroke for the first time after the initiation of the automatic restart reaches at least a given value, to set said in-cylinder air-fuel ratio in such a manner as to become richer than said reference air-fuel ratio, within said combustible range, irrespective of the value of said detected engine speed.

6. The control system according to claim 5, wherein said operational-state detection means is adapted to determine that the in-cylinder temperature is higher as an elapsed time after initiation of said automatic stop state of the engine (1) is closer to a given value which is at most 60 seconds.

7. The control system according to claim 5 or 6, further comprising a coolant temperature sensor (33) for detecting a temperature of coolant of the engine (1), wherein said operational-state detection means is adapted to estimate the in-cylinder temperature based on detection of said coolant temperature sensor (33).

8. The control system according any one of claims 5 to 7, which further comprising an intake-air temperature sensor (29) for detecting a temperature of intake air of the engine, wherein said operational-state detection means is adapted to estimate the in-cylinder temperature based on detection of said intake-air temperature sensor (29).

## Patentansprüche

1. Steuersystem für einen mehrzylindrigen Viertaktmotor (1), das konstruiert ist, um, wenn in einem automatischen Stoppzustand eine Bedingung für den Neustart des Motors (1) erfüllt ist, den Motor (1) basierend auf der Verbrennung in einem Stoppzustand-Verdichtungstakt-Zylinder (12A), der in dem automatischen Stoppzustand in einem Verdichtungstakt war, einmal um einen gegebenen Kurbelwinkel in einer umgekehrten Drehrichtung zu betreiben, und den Motor (1) dann basierend auf der Verbrennung in einem Stoppzustand-Arbeitstakt-Zylinder (12B), der in dem automatischen Stoppzustand in einem Arbeitstakt war, in einer normalen Drehrichtung zu betreiben, um den Motor (1) mittels Einspritzen von Brennstoff in den Stoppzustand-Arbeitstakt-Zylinder (12B) und Antreiben einer Zündkerze (15) automatisch neu zu starten, wobei das Steuersystem **dadurch gekennzeichnet ist, dass** es umfasst:
ein Betriebszustandserfassungsmittel, das geeignet ist wenigstens eine Motordrehzahl und eine Kurbelposition jedes der Zylinder (12A, 12B, 12C, 12D) zu erfassen; und
ein Brennstoffeinspritzsteuerungsmittel, das geeignet ist, eine Menge und einen Zeitpunkt der Brennstoffeinspritzung für jeden der Zylinder (12A, 12B, 12C, 12D) basierend auf einer Motordrehzahl und einer Kurbelposition, die von dem Betriebszustandserfassungsmittel erfasst werden, zu steuern, um ein gegebenes Luft-Brennstoffverhältnis im Zylinder zu einem gegebenen Brennstoffeinspritzzeitpunkt festzulegen,
wobei das Brennstoffeinspritzsteuerungsmittel nach der Einleitung des automatischen Neustarts betriebsfähig ist, einen Zeitpunkt für die Erstbrennstoffeinspritzung für einen Stoppzustand-Ansaugtakt-Zylinder (12C), der in dem automatischen Stoppzustand in einem Ansaugtakt war, festzulegen, um zuzulassen, dass Brennstoff eingespritzt wird, wenn der Stoppzustand-Ansaugtakt-Zylinder (12C) bei oder nach einem Zwischenzeitpunkt eines Verdichtungstakts ist,
wobei das Brennstoffeinspritzsteuerungsmittel betriebsfähig ist, um:
ein Luft-Brennstoffverhältnis im Zylinder des Stoppzustand-Ansaugtakt-Zylinders (12C) zu dem Erstbrennstoffeinspritzzeitpunkt in einer derartigen Weise festzulegen, dass es gleich einem vorgegebenen Referenz-Luft-Brennstoffverhältnis wird, wenn eine von dem Betriebszustandserfassungsmittel erfasste Drehzahl zu einem gegebenen Zeitpunkt ab der Verbrennung gemessen in dem Stoppzustand-Arbeitstakt-Zylinder (12B) gleich oder höher als eine vorgegebene Referenzmotordrehzahl ist, und
das Luft-Brennstoffverhältnis im Zylinder innerhalb eines brennbaren Bereichs in einer derartigen Weise festzulegen, dass es fetter als das Referenz-Luft-Brennstoffverhältnis wird, wenn die erfasste Motordrehzahl einen niedrigeren Wert hat, wenn die erfasste Motordrehzahl kleiner als die vorgegebene Referenzmotordrehzahl ist.

2. Steuersystem nach Anspruch 1, wobei das Referenz-Luft-Brennstoffverhältnis im Bereich von 11 bis 15 ist, und der brennbare Bereich einen fetten Grenzwert von wenigstens 5 hat.

3. Steuersystem nach Anspruch 1 oder 2, wobei das Brennstoffeinspritzsteuermittel betriebsfähig ist, um zusätzlichen Brennstoff in einen spezifischen der Zylinder, der einen Verdichtungstakt durchmacht, welcher nach der Einleitung des automatischen Neustarts stattfindet, einzuspritzen, wenn der spezifische Zylinder bei dem Verdichtungstakt ist, solange ein Luft-Brennstoffverhältnis im Zylinder dieses spezifischen Zylinders innerhalb des brennbaren Bereichs ist.

4. Steuersystem nach einem der Ansprüche 1 bis 3, wobei der vorgegebene Zeitpunkt ein Moment ist, wenn ein Kolben des Stoppzustand-Verdichtungstakt-Zylinders (12A) einen oberen Totpunkt eines Verdichtungstakts erreicht, der nach dem Einleiten des automatischen Neustarts zuerst auftritt.

5. Steuersystem nach einem der Ansprüche 1 bis 4, wobei:
das Betriebszustandserfassungsmittel eine Funktion zum Schätzen einer Temperatur im Zylinder des Motors hat; und
das Brennstoffeinspritzsteuerungsmittel betriebsfähig ist, wenn eine von dem Betriebszustandserfassungsmittel geschätzte Temperatur im Zylinder in einem Zeitraum, bevor der Stoppzustand-Ansaugtakt-Zylinder (12C) zum ersten Mal nach dem Einleiten des automatischen Neustarts einen Verdichtungstakt bewältigt, wenigstens einen vorgegebenen Wert erreicht, um das Luft-Brennstoffverhältnis im Zylinder in einer derartigen Weise innerhalb des brennbaren Bereichs festzulegen, dass es ungeachtet des Werts der erfassten Motordrehzahl fetter als das Referenz-Luft-Brennstoffverhältnis wird.

6. Steuersystem nach Anspruch 5, wobei das Betriebszustandserfassungsmittel geeignet ist, zu bestimmen, dass die Temperatur im Zylinder höher ist, wenn eine nach der Einleitung des automatischen Stoppzustands des Motors (1) vergangene Zeit näher an einem vorgegeben Wert ist, der höchstens 60 Sekunden ist.

7. Steuersystem nach Anspruch 5 oder 6, das ferner einen Kühlmitteltemperatursensor (33) umfasst, um eine Temperatur von Kühlmittel des Motors (1) zu erfassen, wobei das Betriebszustandserfassungsmittel geeignet ist, die Temperatur im Zylinder basierend auf der Erfassung des Kühlmitteltemperatursensors (33) zu schätzen.

8. Steuersystem nach einem der Ansprüche 5 bis 7, das ferner einen Ansauglufttemperatursensor (29) umfasst, um eine Temperatur der Ansaugluft des Motors zu erfassen, wobei das Betriebszustandserfassungsmittel geeignet ist, die Temperatur im Zylinder basierend auf der Erfassung des Ansauglufttemperatursensors 29 zu schätzen.

## Revendications

1. Système de commande pour un moteur multicylindrique à quatre temps (1), qui est conçu pour opérer, lorsqu'une condition pour redémarrer le moteur (1) dans un état d'arrêt automatique est satisfaite, une fois le moteur (1) dans un sens de rotation inverse par un angle de vilebrequin donné en fonction de la combustion dans un cylindre de course de compression à l'état d'arrêt (12A) qui a été sur une course de compression dans l'état d'arrêt automatique, puis opérer le moteur (1) dans un sens de rotation normal en fonction de la combustion dans un cylindre de course d'expansion à l'état d'arrêt (12B) qui a été sur une course d'expansion dans l'état d'arrêt automatique de manière à automatiquement redémarrer le moteur (1) au moyen de l'injection de carburant dans ledit cylindre de course d'expansion à l'état d'arrêt (12B) et de l'entraînement d'une bougie d'allumage (15), ledit système de commande étant **caractérisé par** le fait de comprendre :
un moyen de détection d'état opérationnel adapté à détecter au moins une vitesse du moteur et une position du vilebrequin de chacun des cylindres (12A, 12B, 12C, 12D) ; et
un moyen de commande d'injection de carburant adapté à commander une quantité et un moment d'injection de carburant pour chacun des cylindres (12A, 12B, 12C, 12D) en fonction d'une vitesse du moteur et d'une position du vilebrequin détectées par ledit moyen de détection d'état opérationnel de manière à régler un rapport d'air-carburant donné dans le cylindre à un moment d'injection de carburant donné,
ledit moyen de commande d'injection de carburant pouvant opérer, après l'initiation du redémarrage automatique, pour régler un moment d'injection de carburant initial pour un cylindre de course d'admission à l'état d'arrêt (12C) qui a été sur une course d'admission dans l'état d'arrêt automatique afin de permettre à du carburant d'être injecté lorsque le cylindre de course d'admission à l'état d'arrêt (12C) est à ou après un moment intermédiaire d'une course de compression,
dans lequel ledit moyen de commande d'injection de carburant peut opérer :
pour régler un rapport d'air-carburant dans le cylindre dudit cylindre de course d'admission à l'état d'arrêt (12C) audit moment d'injection de carburant initial de telle manière à devenir égal à un rapport d'air-carburant de référence donné lorsqu'une vitesse du moteur détectée par ledit moyen de détection d'état opérationnel à un moment donné compté à partir de la combustion dans ledit cylindre de course d'expansion à l'état d'arrêt (12B) est supérieure ou égale à une vitesse de référence du moteur donnée, et
pour régler ledit rapport d'air-carburant dans le cylindre de telle manière à devenir plus riche au sein d'une plage combustible que ledit rapport d'air-carburant de référence alors que ladite vitesse du moteur détectée possède une valeur inférieure lorsque ladite vitesse du moteur détectée est inférieure à ladite vitesse de référence du moteur donnée.

2. Système de commande selon la revendication 1, dans lequel ledit rapport d'air-carburant de référence est dans la plage de 11 à 15 et ladite plage combustible possède une valeur limite riche d'au moins 5.

3. Système de commande selon la revendication 1 ou 2, dans lequel ledit moyen de commande d'injection de carburant peut opérer pour injecter du carburant supplémentaire dans un cylindre spécifique des cylindres qui subit une course de compression se produisant en second après l'initiation dudit redémarrage automatique, lorsque ledit cylindre spécifique est sur ladite course de compression tant qu'un rapport d'air-carburant dans le cylindre dudit cylindre spécifique est au sein de ladite plage combustible.

4. Système de commande selon l'une quelconque des revendications 1 à 3, dans lequel ledit moment donné est un moment lorsqu'un piston dudit cylindre de course de compression à l'état d'arrêt (12A) atteint un point mort supérieur d'une course de compression qui se produit en premier après l'initiation du redémarrage automatique.

5. Système de commande selon l'une quelconque des revendications 1 à 4, dans lequel :
ledit moyen de détection d'état opérationnel possède une fonction d'estimation d'une température dans le cylindre du moteur ; et
ledit moyen de commande d'injection de carburant peut opérer, lorsqu'une température dans le cylindre estimée par ledit moyen de détection d'état opérationnel dans une période de temps avant que ledit cylindre de course d'admission à l'état d'arrêt (12C) ne surmonte une course de compression pour la première fois après l'initiation du redémarrage automatique atteint au moins une valeur donnée, pour régler ledit rapport d'air-carburant dans le cylindre de telle manière à devenir plus riche que ledit rapport d'air-carburant de référence,
au sein de ladite plage combustible, quelle que soit la valeur de ladite vitesse du moteur détectée.

6. Système de commande selon la revendication 5, dans lequel ledit moyen de détection d'état opérationnel est adapté à déterminer que la température dans le cylindre est supérieure alors qu'une durée écoulée après l'initiation dudit état d'arrêt automatique du moteur (1) est plus proche d'une valeur donnée qui est de 60 secondes au plus.

7. Système de commande selon la revendication 5 ou 6, comprenant en outre un capteur de température de liquide de refroidissement (33) pour détecter une température du liquide de refroidissement du moteur (1), dans lequel ledit moyen de détection d'état opérationnel est adapté à estimer la température dans le cylindre en fonction de la détection dudit capteur de température de liquide de refroidissement (33).

8. Système de commande selon l'une quelconque des revendications 5 à 7, qui comprend en outre un capteur de température d'air d'admission (29) pour détecter une température de l'air d'admission du moteur, dans lequel ledit moyen de détection d'état opérationnel est adapté à estimer la température dans le cylindre en fonction de la détection dudit capteur de température d'air d'admission (29).
